(19) **Europäisches Patentamt / European Patent Office / Office européen des brevets**

(11) **EP 1 952 871 B1**

(12) **EUROPEAN PATENT SPECIFICATION**

(45) Date of publication and mention
of the grant of the patent:
**19.10.2016 Bulletin 2016/42**

(51) Int Cl.:
*B01D 39/20* (2006.01)   *B01D 46/00* (2006.01)
*B01D 53/94* (2006.01)   *B01J 35/04* (2006.01)
*F01N 3/02* (2006.01)   *F01N 3/28* (2006.01)

(21) Application number: **08152660.0**

(22) Date of filing: **26.11.2004**

(54) **EXHAUST GAS PURIFYING DEVICE AND ITS HOLDING SEALING MATERIAL**

ABGASREINIGUNGSVORRICHTUNG UND SEIN FIXIER- UND DICHTMATTENMATERIAL

DISPOSITIF DE PURIFICATION DE GAZ D'ÉCHAPPEMENT ET SON MATÉRIAU DE MATELAS DE FIXATION ET D'ÉTANCHÉITÉ

(84) Designated Contracting States:
**AT BE BG CH CY CZ DE DK EE ES FI FR GB GR HU IE IS IT LI LU MC NL PL PT RO SE SI SK TR**

(30) Priority: **18.05.2004   JP 2004147884**

(43) Date of publication of application:
**06.08.2008   Bulletin 2008/32**

(62) Document number(s) of the earlier application(s) in
accordance with Art. 76 EPC:
**04816225.9 / 1 743 685**

(73) Proprietor: **IBIDEN CO., LTD.**
**Ogaki-shi**
**Gifu 503-8604 (JP)**

(72) Inventor: **Ninomiya, Takeshi**
**Kitagata, Ibigawacho**
**IBI-GUN Gifu 5010695 (JP)**

(74) Representative: **Hart-Davis, Jason et al**
**Cabinet Beau de Loménie**
**158, rue de l'Université**
**75340 Paris Cedex 07 (FR)**

(56) References cited:
**EP-A- 1 310 641      EP-A- 1 388 649**
**EP-A1- 0 816 065     EP-A1- 1 142 619**
**WO-A-03/031368       US-A- 5 290 522**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an exhaust gas purifying device and its holding sealing material.

BACKGROUND ART

In a honeycomb structural body that removes particulates and the like in exhaust gases discharged from an internal combustion system such as a diesel engine or the like as well as in an exhaust gas purifying device that uses this honeycomb structural body, inorganic fibers are used as materials for various structural members.

More specifically, for example, a sealing material containing inorganic fibers is used as a sealing material (adhesive) used for binding a plurality of ceramic blocks to form a honeycomb structural body and as a sealing material to be formed on the peripheral portion of the honeycomb structural body.

Moreover, in an exhaust gas purifying device in which a honeycomb structural body is housed in a metal shell, a holding seal, mainly composed of inorganic fibers, is used as a holding sealing material interposed between the honeycomb structural body and the metal shell (see, for example, Patent Document 1).

In the case where inorganic fibers having a small average fiber diameter (for example, 6 $\mu$m or less) are used as such inorganic fibers, if these inorganic fibers are taken into the human body, the inorganic fibers will remain in the lung and the like to give adverse effects on the human body. In contrast, from the viewpoint of a good reactive property and the like for a catalyst in the honeycomb structural body, it is desirable to use inorganic fibers having a small average fiber diameter.

Patent Document 1: JP-A 2002-200409

Compositions containing biosoluble inorganic fibers and micaceous binders of WO 03/031368 A2 can be prepared free of refractory ceramic fibers that are respirable but durable in a physiological medium and they can be used as a protective packing material around the pollution control element.

In an integral ceramic filter assembly produced by adhering with a ceramic seal layer outer surfaces of a plurality of ceramic filters of EP 1 142 619 A1, the seal layer includes at least an inorganic fiber, an inorganic binder, an organic binder and an inorganic grain and is formed from an elastic material obtained by bonding the inorganic fiber, which are three-dimensionally interlinked, and the inorganic grin with the inorganic binder and the organic binder, wherein the seal layer may be formed from 10 wt% to 70 wt% of silica-alumina ceramic fiber as a solid, 1 wt% to 30 wt% of silica sol, 0.1 wt% to 5.0 wt% of carboxymethyl cellulose and 3 wt% to 80 wt% of silicon carbide powder.

EP 0 816 065 A1 shows a ceramic structural body comprising an assembly of plural united ceramic members which are integrally adhered by interposing a sealing member of an elastic material consisting of at least inorganic fibers, an inorganic binder, and organic binder and inorganic particles and mutually bonded three-dimensionally intersected organic fibers and inorganic particles through the inorganic binder and organic binder between the mutual ceramic members, wherein the sealing member is an elastic material obtained by using a ceramic fiber as the inorganic fiber, a colloidal sol as the inorganic binder, a polysaccharide as the organic binder, and at least one inorganic powder or whisker selected from a carbide and a nitride as the inorganic particle, and mixing them with each other and the sealing member may consist of 10 to 70 wt% of silica-alumina ceramic fiber, 1 to 30 wt% of silica sol, 0.1 to 5.0 wt% of carboxymethyl cellulose and 3 to 80 wt% of silicon carbide powder as a solid content.

DISCLOSURE OF THE INVENTION

PROBLEMS TO BE SOLVED BY THE INVENTION

With respect to the inorganic fibers to be used for a honeycomb structural body and an exhaust gas purifying device, although those having a small average fiber diameter are desirably used from the viewpoint of the functions thereof, those having a large average fiber diameter are desirably used from the viewpoint of the safety to the human body; consequently, the required properties are contradictory.

MEANS FOR SOLVING THE PROBLEMS

In order to solve the above-mentionedproblems, the present inventors have studied hard and found that, when inorganic fibers, which, even if they are taken into the human body, will be decomposed in the human body, are used, it is possible to ensure safety independent of the average fiber diameter and the like; thus, the present invention has been completed.

The present invention is defined in the claims.

EFFECTS

The exhaust gas purifying device of the present invention contain at least one kind of compound selected from the group consisting of an alkali metal compound, an alkali-earth metal compound and a boron compound as inorganic fibers; therefore, the ionization tendency is high, the heat resistance is superior, and the solubility to physiological salt solution is high. Therefore, upon manufacturing, using or discarding the honeycomb structural body and the like, even when the material thereof is taken into the human body, it will be dissolved and discharged out of the human body; thus, it becomes possible to ensure safety.

MODES

First, description will be given of the honeycomb structural body according to a first aspect not of the present invention.

The honeycomb structural body according to the first aspect is a pillar-shaped honeycomb structural body made of porous ceramics and comprising a large number of through holes that are placed in parallel with one another in the length direction with a wall portion interposed therebetween, wherein the honeycomb structural body has a sealing material layer formed thereon, and the sealing material layer contains inorganic fibers comprising 60 to 85% by weight of silica and 15 to 40% by weight of at least one kind of compound selected from the group consisting of an alkali metal compound, an alkali-earth metal compound and a boron compound.

With respect to the honeycomb structural body according to the first aspect, any structural body may be used as long as it is made of porous ceramics and comprises a large number of through holes that are placed in parallel with one another in the length direction with a wall portion interposed therebetween. Therefore, the honeycomb structural body may be a pillar-shaped porous ceramic member made of a single sintered body comprising a large number of through holes that are placed in parallel with one another in the length direction with a wall portion interposed therebetween, or may have a structure comprising a plurality of pillar-shaped porous ceramic members, said porous ceramic members are combined with one another through a sealing material layer, said pillar-shaped porous ceramic members including a large number of through holes that are placed in parallel with one another in the length direction with a partition wall interposed therebetween.

Therefore, in the following explanation on the honeycomb structural body according to the first aspect, when both of the types are explained in a separate manner, the former is explained as a honeycomb structural body of a first mode and the latter is explained as that of a second mode. When it is not necessary to discriminate the two types, these are explained simply as a honeycomb structural body.

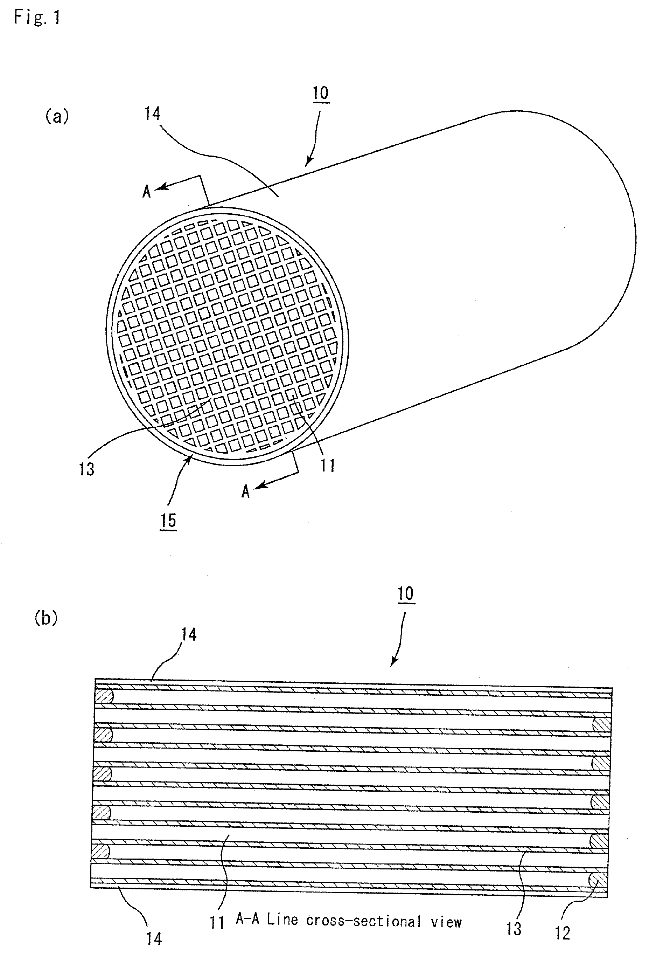

First, referring to Fig. 1, description will be given of the honeycomb structural body of the first mode.

Fig. 1 (a) is a perspective view that schematically shows one example of the honeycomb structural body of the first mode, and Fig. 1(b) is a cross-sectional view taken along line A-A of Fig. 1(a).

The honeycomb structural body 10 of the first mode has a structure in which a pillar-shaped body 15 comprising a large number of through holes 11 that are placed in parallel with one another in the length direction with a wall portion 13 interposed therebetween has a sealing material layer 14 formed on the peripheral portion thereof. The sealing material layer 14 is formed to reinforce the peripheral portion of the pillar-shaped body 15, to adjust the shape thereof and also to improve the heat resistance of the honeycomb structural body 10.

The sealing material layer 14 contains inorganic fibers comprising 60 to 85% by weight of silica and 15 to 40% by weight of at least one kind of compound selected from the group consisting of an alkali metal compound, an alkali-earth metal compound and a boron compound.

The above-mentioned silica is prepared as SiO or $SiO_2$.

Moreover, examples of the alkali metal compound include oxides of Na and K and the like, and examples of the alkali-earth metal compound include oxides of Mg, Ca and Ba and the like. Examples of the boron compound includes oxides of B and the like.

The silica content of less than 60% by weight makes it difficult to apply a glass fusing method and also to carry out a fiber-forming process. Moreover, the content in this level tends to make the structure fragile and make the inorganic fibers too easily dissolved in physiological salt solution.

In contrast, the silica content exceeding 85% by weight makes the inorganic fibers difficult in dissolving in physiological salt solution.

Here, the content of silica was calculated based upon $SiO_2$ conversion.

Moreover, in the case where the content of at least one kind of compound selected from the group consisting of an alkali metal compound, an alkali-earth metal compound and a boron compound is less than 15% by weight, the inorganic fibers tend to become difficult indissolvinginphysiological salt solution.

In contrast, the content exceeding 40% by weight makes it difficult to apply a glass fusing method in the production thereof and also difficult to make it into fiber form. Moreover, the content in this level makes the structure fragile and also makes the inorganic fibers too easily dissolved in physiological salt solution.

The solubility of the inorganic fibers to physiological salt solution is desirably set to 30 ppm or more. The solubility of less than 30 ppm makes it difficult to discharge inorganic fibers out of the human body when the inorganic fibers are taken into the human body, resulting in adverse effects on the health.

The measuring method of the solubility will be described later.

The honeycomb structural body contains at least one kind of compound selected from the group consisting of an alkali metal compound, an alkali-earth metal compound and a boron compound as inorganic fibers; therefore, the ionization tendency is high, the heat resistance is high, and the solubility to physiological salt solution is high. For this reason, upon manufacturing, using or discarding the honeycomb structural body and the like, even if the material thereof is taken into the human body, it will be dissolved and discharged out of the human body; thus, it becomes possible to ensure safety.

Moreover, since the above-mentioned inorganic fibers are used in the honeycomb structural body, it becomes possible to provide sufficient NOx absorbing and storing effects thereto.

The reason for this is not clear, but presumably because, since the alkali metal compound, the alkali earth metal compound or the boron compound is allowed to react with NOx to generate a nitrate, it is considered that the NOx is absorbed and stored as the nitrate.

Furthermore, in the case where a catalyst is supported on the honeycomb structural body, since the above-mentioned inorganic fibers are used, it becomes possible to suppress the catalyst from being poisoned by sulfur (S), sulfur oxides (SOx) and phosphor (P), and consequently to prevent the catalyst functions from deteriorating.

The reason for this is not clear, but presumably because the alkali metal compound, the alkali earth metal compound or the boron compound is allowed to react with sulfur, sulfur oxides and phosphor in exhaust gases to generate sulfates and phosphates; thus, it becomes possible to prevent the catalyst, such as platinum, rhodium and the like, from reacting with sulfur, sulfur oxides and phosphors.

The lower limit of the content of the inorganic fibers in the materials is desirably set to 10% by weight, more desirably 20% by weight on a solid component basis. In contrast, the upper limit of the content of the inorganic fibers in the materials is desirably set to 70% by weight, more desirably 40% by weight, further desirably 30% by weight on a solid component basis. The content of the inorganic fibers of less than 10% by weight tends to cause degradation in elasticity; in contrast, the content thereof exceeding 70% by weight tends to cause a reduction in thermal conductivity and degradation in effects as the elastic member.

With respect to the manufacturing method of the inorganic fibers, not particularly limited, any of conventionally known manufacturing methods of inorganic fibers may be used. In other words, any one of methods, such as a blowing method, a spinning method, a sol-gel method and the like, may be used.

Moreover, the lower limit of the shot content of the inorganic fibers is desirably set to 1% by weight and the upper limit thereof is desirably set to 10% by weight, more desirably 5% by weight, further desirably 3% by weight. The lower limit of the fiber length is desirably set to 0.1 $\mu$m and the upper limit thereof is desirably set to 1000 $\mu$m, more desirably 100 $\mu$m, further desirably 50 $\mu$m.

Here, it is difficult to set the shot content to less than 1% by weight in production, and the shot content exceeding 10% by weight tends to damage the peripheral portion of the pillar-shaped body. Moreover, the fiber length less than 0.1 $\mu$m makes it difficult to form a honeycomb structural body having a sufficient elasticity, and the fiber length exceeding 1000 $\mu$m tends to cause pills in the form of fibers, making it difficult to make the thickness of the sealing material layer thinner consequently to cause degradation in the dispersing property when inorganic particles, which will be described later, are blended therein.

In addition to the inorganic fibers, the sealing material layer may contain an inorganic binder, an organic binder, inorganic particles and the like as its materials.

Examples of the inorganic binder include silica sol, alumina sol and the like. Each of these may be used alone or two or more kinds of these may be used in combination. Among the inorganic binders, silica sol is desirably used.

The lower limit of the content of the inorganic binder in the materials is desirably set to 1% by weight, more desirably 5% by weight on a solid component basis. In contrast, the upper limit of the content of the inorganic binder in the materials is desirably set to 30% by weight, more desirably 15% by weight, further desirably 9% by weight on a solid component basis. The content of the inorganic binder of less than 1% by weight tends to cause degradation in bonding strength; in contrast, the content thereof exceeding 30% by weight tends to cause a reduction in thermal conductivity.

Examples of the organic binder include polyvinyl alcohol, methyl cellulose, ethyl cellulose, carboxymethyl cellulose and the like. Each of these may be used alone or two or more kinds of these may be used in combination. Among the organic binders, carboxymethyl cellulose is desirably used.

The lower limit of the content of the organic binder in the materials is desirably set to 0.1% by weight, more desirably 0.2% by weight, further desirably 0.4% by weight on a solid component basis. In contrast, the upper limit of the content of the organic binder in the materials is desirably set to 5.0% by weight, more desirably 1.0% by weight, further desirably 0.6% by weight on a solid component basis. The content of the organic binder of less than 0.1% by weight tends to cause difficulty in suppressing migration of the sealing material layer; in contrast, the content exceeding 5.0% by weight tends to cause an excessive increase in the rate of the organic components to a honeycomb structural body to be produced depending on the thickness of the sealing material layer, resulting in the necessity of a heating process as a post-process upon manufacturing the honeycomb structural body.

Examples of the inorganic particles may include carbides, nitrides and the like, and specific examples thereof may include inorganic powder, whiskers and the like made of silicon carbide, silicon nitride, boron nitride and the like. Each of these may be used alone, or two or more kinds of these may be used in combination. Among the inorganic fine particles, silicon carbide having superior thermal conductivity is desirably used.

The lower limit of the content of the inorganic particles in the materials is desirably set to 3% by weight, more desirably 10% by weight, further desirably 20% by weight on a solid component basis. In contrast, the upper limit of the content of the inorganic particles in the materials is desirably set to 80% by weight, more desirably 60% by weight, further desirably 40% by weight on a solid component basis. The content of the inorganic particles of less than 3% by weight tends to cause a reduction in thermal conductivity; in contrast, the content thereof exceeding 80% by weight tends to cause a reduction in bonding strength, when the sealing material layer is exposed to high temperatures.

The lower limit of the particle size of the inorganic particles is desirably set to 0.01 $\mu$m, more desirably 0.1 $\mu$m, and the upper limit of the particle size of the inorganic particles is desirably set to 100 $\mu$m, more desirably 15 $\mu$m, further desirably to 10 $\mu$m. The particle size of less than 0.01 $\mu$m tends to cause high costs, and the particle size exceeding 100 $\mu$m tends to cause a reduction in bonding strength as well as in thermal conductivity.

Here, in the honeycomb structural body 10, the wall portion 13 separating the through holes 11 from each other is allowed to function as filters for collecting particles.

In other words, as shown in Fig. 1(b), each of the through holes 11, formed in the pillar-shaped body 15 made of a single sintered body, has one of its ends on the inlet-side and outlet-side of exhaust gases sealed with a plug 12; thus, exhaust gases that have entered one of the through holes 11 are allowed to flow out of another through hole 11 after always passing through the wall portion 13 that separates the corresponding through holes 11.

Therefore, the honeycomb structural body 10, shown in Fig. 1, is allowed to function as a honeycomb filter for purifying exhaust gases. When the honeycomb structural body functions as the honeycomb filter for purifying exhaust gases, all the wall portions of the through holes may be designed to function as filters for collecting particles, or only a part of the wall portions of the through holes may be designed to function as filters for collecting particles.

Moreover, in the honeycomb structural body of the first mode, the end portion of each through hole is not necessarily sealed, and in the case where the end portion of each through hole is not sealed, for example, the honeycomb structural body may be used as a catalyst supporting body on which a catalyst for converting exhaust gases can be supported.

Furthermore, the opening diameter of through holes formed in the honeycomb structural body of the first mode may be the same in all the through holes, or may be different from each other; however, it is desirable to make the opening diameter of gas flow-in cells greater than the opening diameter of gas flow-out cells with respect to all the end face. In other words, the honeycomb structural body of the first mode is desirably designed so that the opening diameters are made different from each other between the through holes with ends on one of end faces being sealed and the through holes with ends on the other end face being sealed. Thus, since it becomes possible to accumulate a large amount of ashes on the gas flow-in cells and to effectively burn particulates, the effects of the honeycomb filter for purifying exhaust gases are easily exerted.

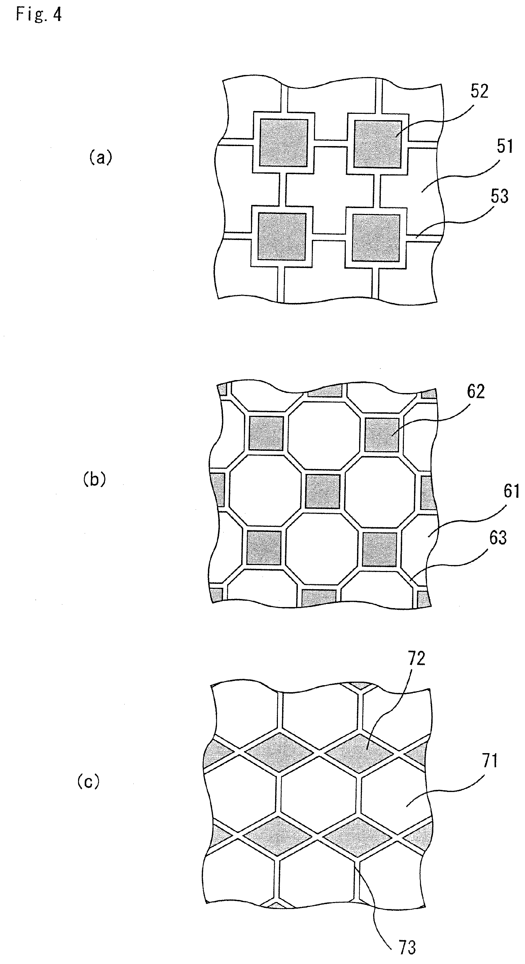

With respect to the modes by which the opening diameters are made different from each other between the through holes with ends on one of end faces being sealed and the through holes with ends on the other end face being sealed, not particularly limited, for example, those shown in Figs. 4(a) to 4(c) may be used.

Fig. 4(a) shows a partially enlarged view that schematically shows one example of an end face on the gas inlet side of the honeycomb structural body in which the opening diameters are made different from each other between the through holes with ends on one of end faces being sealed and the through holes with ends on the other end face being sealed, and in Fig. 4(a), cross-shaped through holes 51, each having a large opening diameter with one of ends on the gas outlet side being sealed with a plug, are placed as gas flow-in cells, and square through holes, each having a small opening diameter with one of ends on the gas inlet side being sealed with a plug 52, are placed as gas flow-out cells, and the respective cells are separated by the wall portion (or partition wall) 53.

Fig. 4(b) shows a partially enlarged cross-sectional view that schematically shows another example of an end face on the gas inlet side of the honeycomb structural body in which the opening diameters are made different from each other between the through holes with ends on one of end faces being sealed and the through holes with ends on the other end face being sealed, and in Fig. 4(b), through holes 61, each having an approximately right octagonal shape and a large opening diameter with one of ends on the gas outlet side being sealed with a plug, are placed as gas flow-in cells, and square through holes, each having a small opening diameter with one of ends on the gas inlet side being sealed with a plug 62, are placed as gas flow-out cells, and the respective cells are separated by the wall portion (or partition wall) 63.

Fig. 4(c) shows a partially enlarged cross-sectional view that schematically shows still another example of an end face on the gas inlet side of the honeycomb structural body in which the opening diameters are made different from each other between the through holes with ends on one of end faces being sealed and the through holes with ends on the other end face being sealed, and in Fig. 4(c), through holes 71, each having an approximately right pentagonal shape and a large opening diameter with one of ends on the gas outlet side being sealed with a plug, are placed as gas flow-in cells, and square through holes, each having a small opening diameter with one of ends on the gas inlet side being sealed with a plug 72, are placed as gas flow-out cells, and the respective cells are separated by the wall portion (or partition wall) 73.

Moreover, in the honeycomb structural body of the first mode, the aperture rate on each of end faces may be the same or different from each other; however, in the case where the honeycomb structural body of the first mode is designed so that the aperture rates on the respective end faces are made different from each other between the through holes with ends on one of end faces being sealed and the through holes with ends on the other end face being sealed, it is desirable to make the aperture rate on the gas flow-in side greater. Thus, since it becomes possible to accumulate a large amount of ashes on the gas flow-in cells and to suppress an increase in the pressure loss, the effects of the honeycomb filter for purifying exhaust gases are easily exerted. Here, with respect to the specific shape of through holes in the case where the aperture rates on the respective end faces are made different from each other, for example, shapes and the like as shown in the above-mentioned Figs. 4(a) to 4(c) are proposed.

Here, the shape of the honeycomb structural body of the first mode is not limited to a cylindrical shape as shown in Fig. 1, and a pillar shape, a rectangular pillar shape or the like the cross section of which is a biased flat shape, such as an elliptical column shape, may be used.

Next, description will be given of the materials and the like of the honeycomb structural body of the first mode.

With respect to the material of the pillar-shaped body made of porous ceramics, not particularly limited, examples thereof include: nitride ceramics such as aluminum nitride, silicon nitride, boron nitride, titanium nitride and the like; carbide ceramics such as silicon carbide, zirconium carbide, titanium carbide, tantalum carbide, tungsten carbide and the like; and oxide ceramics such as alumina, zirconia, cordierite, mullite and the like; and the like and, normally, oxide ceramics such as cordierite and the like are utilized. These materials make it possible to carry out the manufacturing process at low costs, have a comparatively small coefficient of thermal expansion and are less susceptible to oxidation during use. Further, silicon-containing ceramics made by blending metallic silicon in the above-mentioned ceramics, and ceramics bonded by silicon and silicate compoundmay also be used, and for example, a ceramic material made by blending metal silicon with silicon carbide is suitably used.

In the case where the honeycomb structural body of the first mode is used as a honeycomb filter for purifying exhaust gases, the average pore diameter of the porous ceramic is desirably set in a range from 5 to 100 $\mu$m. The average pore diameter of less than 5 $\mu$m tends to cause clogging of particulates easily. In contrast, the average pore diameter exceeding 100 $\mu$m tends to cause particulates to pass through the pores; thus, the particulates cannot be collected, making the honeycomb structural body unable to function as a filter.

Here, the above-mentioned pore diameter can be measured through known methods such as a mercury injection method, Archimedes method, a measuring method using a scanning electronic microscope (SEM), and the like.

Moreover, in the case where the honeycomb structural body of the first mode is used as a honeycomb filter for purifying exhaust gases, although not particularly limited, the porosity of the porous ceramic material is desirably set in a range from 40 to 80%. The porosity of less than 40% tends to cause clogging. In contrast, the porosity exceeding 80% causes degradation in the strength of the pillar-shaped body; thus, it might be easily broken.

Here, the above-mentioned porosity can be measured through known methods such as a mercury injection method, Archimedes method, a measuring method using a scanning electronic microscope (SEM), and the like.

With respect to the particle size of ceramic particles to be used upon manufacturing the pillar-shaped body of this type, although not particularly limited, the size is desirably set so as to make the pillar-shaped body less susceptible to shrinkage in the succeeding sintering process, and for example, those particles, prepared by combining 100 parts by weight of ceramic particles having an average particle size from about 0.3 to 50 $\mu$m with 5 to 65 parts by weight of ceramic particles having an average particle size from about 0.1 to 1.0 $\mu$m, are desirably used. By mixing ceramic powders having the above-mentioned respective particle sizes at the above-mentioned blending rate, it becomes possible to manufacture a pillar-shaped body made from a porous ceramic material.

In the case where the honeycomb structural body of the first mode has a structure in which, as shown in Fig. 1, the ends of the through holes are sealed with plugs, with respect to the material for the plug, not particularly limited, the same material as that of the above-mentioned pillar-shaped body, and the like may be used.

Here, the honeycomb structural body of the first mode may be used as a catalyst supporting member, and in this case, a catalyst (catalyst for converting exhaust gases) used for converting exhaust gases is supportedon the honeycomb structural body.

By using the honeycomb structural body as a catalyst supporting member, toxic components such as HC, CO, NOx and the like contained in exhaust gases, and HC and the like derived from organic components slightly contained in the honeycomb structural body are positively converted.

Examples of the catalyst for converting exhaust gases, not particularly limited may include noble metals such as platinum, palladium, rhodium and the like. Each of these noble metals may be used alone, or two or more kinds of these may be used in combination.

In the case where a catalyst is supported thereon in this manner, by using the inorganic fibers as described above, NOx absorbing and storing effects are applied thereto so that it becomes possible to suppress the catalyst from being poisoned and consequently to provide a superior exhaust gas converting function.

Here, the catalyst for converting exhaust gases made of the above-mentionednoblemetal is a so-called three-way catalyst, and with respect to the above-mentioned exhaust gas converting catalyst, not particularly limited to the above-mentioned noble metals, any desired catalyst may be used as long as it can convert the toxic components, such as CO, HC, NOx and the like, in exhaust gases. For example, in order to convert NOx in exhaust gases, an alkali metal, an alkali-earth metal and the like may be supported thereon. Moreover, a rare-earth oxide or the like may be added as a co-catalyst.

When the catalyst for converting exhaust gases is supported on the honeycomb structural body of the first mode in this manner, the toxic components such as CO, HC, NOx and the like contained in exhaust gases discharged from an internal combustion system such as an engine or the like are made in contact with the catalyst for converting exhaust gases so that reactions, indicated by the following reaction formulas (1) to (3), are mainly accelerated.

$$CO + (1/2)O_2 \rightarrow CO_2 \, ... \qquad (1)$$

$$C_mH_n + (m + (n/4))O_2 \rightarrow mCO_2 + (n/2)H_2O \, ... \qquad (2)$$

$$CO + NO \rightarrow (1/2)N_2 + CO_2 \, ... \qquad (3)$$

Through the above-mentioned reaction formulas (1) and (2), CO and HC, contained in exhaust gases, are oxidized to $CO_2$ and $H_2O$, and through the above-mentioned reaction formula (3), NOx contained in the exhaust gases is reduced by CO to $N_2$ and $CO_2$.

In other words, in the honeycomb structural body in which the catalyst for converting exhaust gases is supported, the toxic components such as CO, HC, NOx and the like contained in exhaust gases are purified into $CO_2$, $H_2O$, $N_2$ and the like, and externally discharged.

Moreover, in the case where the catalyst for converting exhaust gases is supported in the honeycomb structural body of the first mode, the catalyst may be supported uniformly inside the through hole, or may be supported on only one area inside the through hole, or may be supported in a manner so as to have a density gradient fromone of the gas flow-inside and gas flow-out side toward the other side.

Furthermore, the honeycomb structural body of the first mode may have a structure in which an end portion of each through hole is sealed, with a catalyst for converting exhaust gases being supported thereon, so as to function as a honeycomb filter for purifying exhaust gases.

In this case, the catalyst for converting exhaust gases may be supported on both of the gas flow-in cell and the gas flow-out cell, or on only one of the cells; and, more desirably, the catalyst is supported on only the gas flow-out cell. Thus, the resulting structure is allowed to effectively exert both of the functions as the honeycomb filter for purifying exhaust gases and the functions for converting exhaust gases by the use of the catalyst for converting exhaust gases.

Moreover, in the case where a catalyst is supported on the honeycomb structural body of the first mode, in order to improve the reactivity of the catalyst, the honeycomb structural body may have thin wall (0.01 to 0.2 mm) with a high density (400 to 1500 cells/square inch (62 to 233 cells/cm$^2$)) so that the specific surface area is increased. This structure also makes it possible to improve the temperature raising property by utilizing exhaust gases.

When the reactivity of the catalyst is improved as described above, in particular, when the thickness of the partition wall is made thinner, the honeycomb structural body becomes more susceptible to erosion (wind erosion) due to exhaust gases. For this reason, the strength of the end portions is desirably improved by the following methods so as to prevent erosion (improvement of erosion proof) of the end portions on the exhaust gas flow-in side (preferably, with respect to the thickness of a portion ranging from 1 to 10 mm in the end).

More specifically, the following methods and the like are proposed: a method in which the partition wall of the end portion is made about 1.1 to 2.5 times thicker than the base material, a method in which a glass layer is installed or the ratio of the glass component is made higher (erosion is prevented by allowing the glass to fuse in comparison with the base material), a method in which the pore capacity and the pore diameter are made smaller to form a dense structure (more specifically, the porosity at the end portion is made lower than the porosity of the base material except for the end portion by 3% or less or the porosity of the end portion is preferably set to 30% or less), a method in which phosphate, aluminum diphosphate, a composite oxide between silica and alkali metal, silica sol, zirconia sol, alumina sol, titaniasol, cordieritepowder, cordierite cervene, talc, alumina or the like is added thereto and the corresponding portion is sintered to form a reinforced portion, and a method in which the catalyst layer is made thicker (to prepare a thickness of 1.5 times or less the base material).

Next, description will be given of a manufacturing method (hereinafter, also referred to as the firstmanufacturingmethod) for the pillar-shaped honeycomb structural body made of porous ceramics of the first mode.

First, a raw material paste is prepared by adding a binder and a dispersant solution to the above-mentioned ceramic powder.

With respect to the binder, not particularly limited, examples thereof may include: methylcellulose, carboxy methylcellulose, hydroxy ethylcellulose, polyethylene glycol, phenolic resin, epoxy resin and the like.

In general, the blended amount of the above-mentioned binder is desirably set to 1 to 10 parts by weight with respect to 100 parts by weight of the ceramic powder.

With respect to the dispersant solution, not particularly limited, examples thereof may include: an organic solvent such as benzene or the like; alcohol such as methanol or the like; water and the like.

An appropriate amount of the dispersant solution is mixed therein so that the viscosity of the material paste is set within a fixed range.

These ceramic powder, binder and dispersant solution are mixed by an attritor or the like, and sufficiently kneaded by a kneader or the like, and then extrusion-molded so that a pillar-shaped formed body having approximately the same shape as the pillar-shaped body 15 shown in Fig. 1 is formed.

Moreover, a molding auxiliary may be added to the material paste, if necessary.

With respect to the molding auxiliary, not particularly limited, examples thereof may include: ethylene glycol, dextrin, fatty acid soap, polyalcohol and the like.

Next, the ceramic formed body is dried by using a microwave drier or the like.

Then, if necessary, a mouth-sealing process is carried out so that predetermined through holes are filled with a plug, and the resulting formed body is again subjected to a drying process using a microwave drier or the like. With respect to the plug, not particularly limited, for example, the same material as the material paste may be used.

When the mouth-sealing process is carried out in the above-mentioned process, a honeycomb structural body, which functions as a honeycomb filter for purifying exhaust gases, is manufactured through following-processes.

Next, the ceramic formed body is subjected to degreasing and sintering processes under predetermined conditions so that a pillar-shaped body 15 made of porous ceramics is manufactured.

Thereafter, a sealing material layer 14 is formed on the circumference of the pillar-shaped body 15 thus manufactured.

With respect to the sealingmaterial paste used for forming the sealingmaterial layer, not particularly limited, for example, the paste containing inorganic binder, organic binder and inorganic particles and the like in addition to the above-mentioned inorganic fiber can be used.

Moreover, the sealing material paste may contain a small amount of moisture, a solvent and the like, and normally, these moisture, solvent and the like are almost entirely scattered through a heating process and the like after the coating process of the sealing material paste.

In order to soften the sealing material paste and impart flowability thereto so as to be easily applied, in addition to the above-mentioned inorganic fibers, inorganic binder, organic binder and inorganic particles, this sealing material paste may contain moisture and another solvent such as acetone, alcohol or the like, in a range from about 35 to 65% by weight with respect to the total weight, and the viscosity of the sealing material paste is desirably set within a range of $45 \pm 5$ P·s (40000 to 50000 cps (cP)).

Next, the sealingmaterial paste layer thus formed is dried at a temperature of about 120°C to evaporate moisture to form a sealing material layer 14 so that a honeycomb structural body 10 having the sealing material layer 14 formed on the circumference on the pillar-shaped body 15 as shown in Fig. 1 is prepared.

The honeycomb structural body according to the first mode is manufactured through the above-mentioned processes.

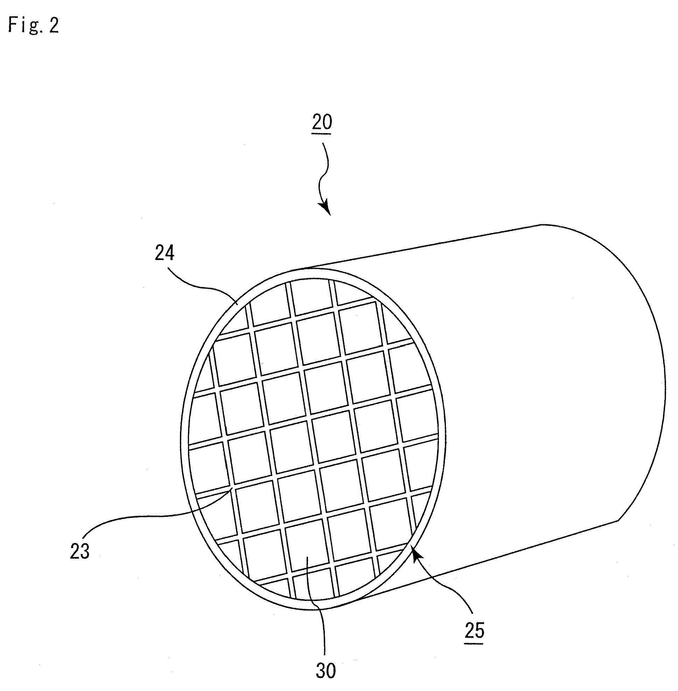

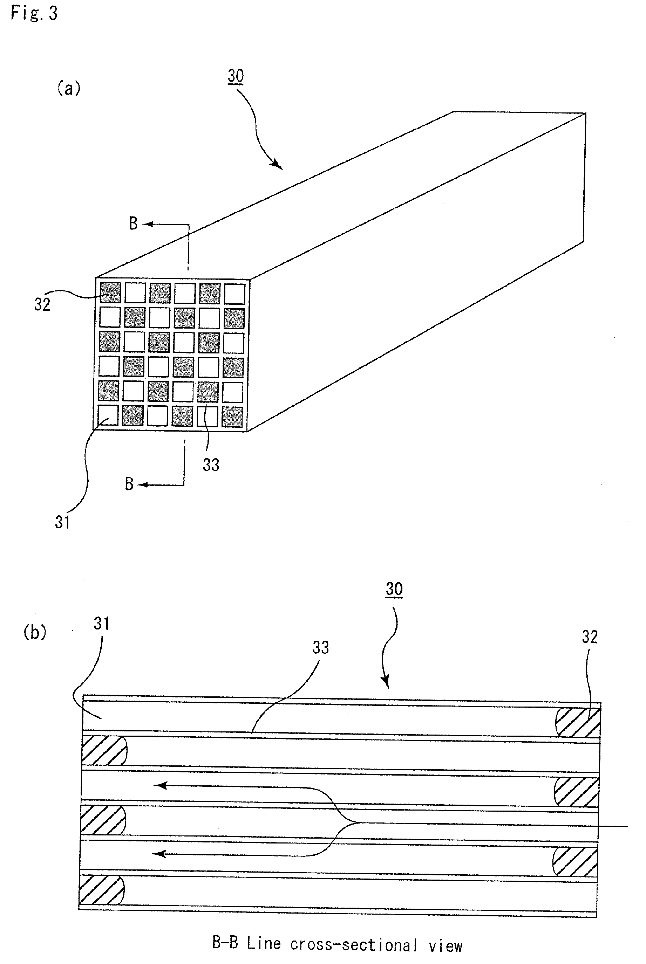

Referring to Figs. 2 and 3, description will be given of the honeycomb structural body of the second mode.

Fig. 2 is a perspective view that schematically shows one example of the honeycomb structural body of the second mode.

Fig. 3 (a) is a perspective view that schematically shows a porous ceramic member to be used for the honeycomb structural body of the second mode shown in Fig. 2, and Fig. 3(b) is a cross-sectional view taken along line B-B of Fig. 3(a).

As shown in Fig. 2, in the honeycomb structural body 20 of the second mode, a plurality of porous ceramic members 30 are combined with one another through sealing material layer 23 to form a ceramic block 25, and a sealing material layer 24 is also formed on the peripheral portion of the ceramic block 25.

Moreover, as shown in Fig. 3, each of the porous ceramic members 30 has a structure in which a number of through holes 31 are placed in parallel with one another in the length direction so that partition wall 33 that separates the through holes 31 from each other is allowed to function as filters for collecting particles.

In this case, with respect to the sealing material layer, the same sealingmaterial layer as that explained in the honeycomb structural body of the first mode, that is, the sealing material layer, which contains inorganic fibers comprising 60 to 85% by weight of silica and 15 to 40% by weight of at least one kind of compound selected from the group consisting of an alkali metal compound, an alkali-earth metal compound and a boron compound, is formed.

The above-mentioned honeycomb structural body contains at least one kind of compound selected from the group consisting of an alkali metal compound, an alkali-earth metal compound and a boron compound as inorganic fibers; therefore, the ionization tendency is high, the heat resistance is superior, and the solubility to physiological salt solution is high. Consequently, upon manufacturing, using or discarding the honeycomb structural body and the like, even if the material thereof was taken into the body, it would be dissolved and discharged out of the body; thus, it becomes possible to ensure safety.

Moreover, since the inorganic fibers are used in the honeycomb structural body, it becomes possible to provide sufficient NOx absorbing and storing effects thereto.

The reason for this is not clear, but presumably because, since the alkali metal compound, the alkali earth metal compound or the boron compound is allowed to react with NOx to generate a nitrate, the NOx is absorbed and stored as the nitrate.

Furthermore, in the case where a catalyst is supported on the honeycomb structural body, since the above-mentioned inorganic fibers are used, it becomes possible to suppress the catalyst from being poisoned by sulfur (S), sulfur oxides (SOx) and phosphor (P), and consequently to prevent the catalyst functions from deteriorating.

The reason for this is not clear, but presumably because the alkali metal compound, the alkali earth metal compound or the boron compound is allowed to react with sulfur, sulfur oxides and phosphor in exhaust gases to generate sulfates and phosphates; thus, it becomes possible to prevent the catalyst, such as platinum, rhodium and the like, from reacting with sulfur, sulfur oxides and phosphor.

Here, the sealing material layer 24 is placed so as to prevent exhaust gases from leaking through the peripheral portion of the ceramic block 25 and protect the ceramic block, when the honeycomb structural body 20 is placed in an exhaust passage in an internal combustion engine.

Moreover, the sealing material layer 23 is placed so as to bond the porous ceramic members 30 to each other and prevent exhaust gases from leaking from porous ceramic members 30. The sealing material layer 23 is also referred to as an adhesive layer.

Therefore, the honey comb structural body 20, shown in Figs. 2 and 3, is allowed to function as a honeycomb filter for purifying exhaust gases.

In the same manner as the honeycomb structural body of the first mode, in the honeycomb structural body of the second mode also, the end portion of each through hole is not necessarily sealed, and in the case where the end portion of each through hole is not sealed, for example, the honeycomb structural body may be used as a catalyst supporting body on which a catalyst for converting exhaust gases can be supported.

In the case where a catalyst is supported thereon, by using the inorganic fibers as described above, NOx absorbing and storing effects are applied thereto so that it becomes possible to suppress the catalyst from being poisoned and consequently to provide a superior exhaust gas converting function.

Moreover, in the same manner as the opening diameter and the aperture rate of through holes formed in the honeycomb structural body of the first mode, the opening diameter and the aperture rate of through holes formed in the honeycomb structural body of the second mode may be the same in all the through holes, or may be different from each other; however, it is desirable to make the opening diameter or the aperture rate of gas flow-in cells greater than the opening diameter or the aperture rate of gas flow-out cells.

In other words, the honeycomb structural body of the first mode is desirably designed so that the opening diameters are made different from each other between the through holes with ends on one of end faces being sealed and the through holes with ends on the other end face being sealed. Thus, since it becomes possible to accumulate a large amount of ashes on the gas flow-in cells and to effectively burn particulates, the effects of the honeycomb filter for purifying exhaust gases are easily exerted.

Moreover, for the same reason as described above, the honeycomb structural body of the first mode can be designed so that the aperture rates on the respective end faces are made different from each other between the through holes with ends on one of end faces being sealed and the through holes with ends on the other end face being sealed.

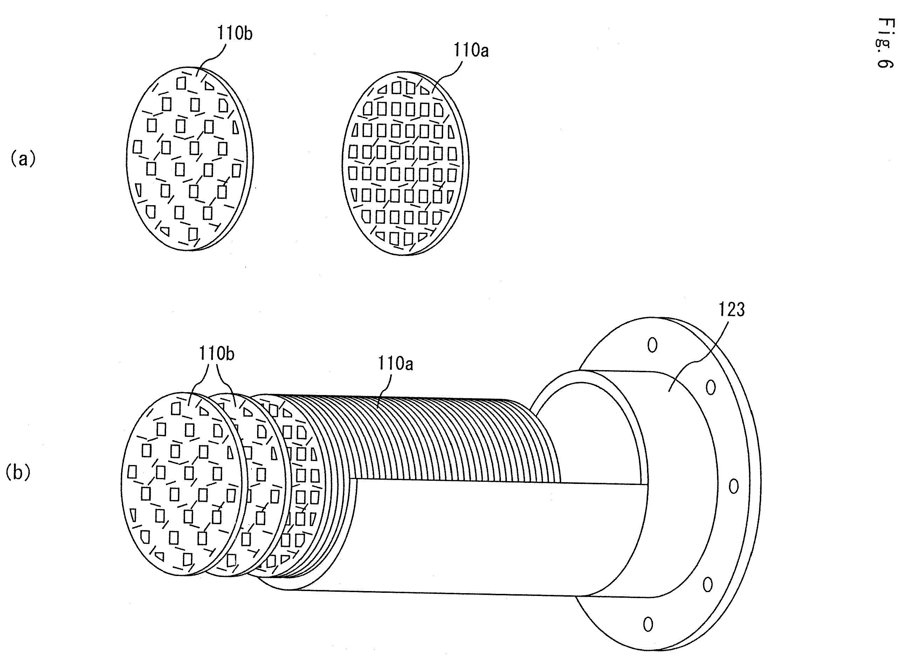

In the same manner as the honeycomb structural body of the first mode, with respect to the modes by which the opening diameters and the opening rates are made different from each other between the through holes with ends on one of end faces being sealed and the through holes with ends on the other end face being sealed, not particularly limited, for example, those shown in Figs. 6(a) to 6(c), and the like may be used.

Moreover, the shape of the honeycomb structural body of the second mode is not limited to a cylindrical shape as shown in Fig. 2, and a pillar shape, a rectangular pillar shape or the like the cross section of which has a biased flat shape, such as an elliptical column shape, may be used.

Next, description will be given of the materials and the like of the honeycomb structural body of the second mode.

With respect to the material for the porous ceramic member, not particularly limited, examples thereof may include: nitride ceramics, carbide ceramics, oxide ceramics and the like in the same manner as the material for the pillar-shaped body as described in the honeycomb structural body of the first mode, and among these, silicon carbide, which has high heat resistance, is superior in mechanical properties and has a high thermal conductivity, is desirably used. Here, silicon-containing ceramics made by blending metallic silicon in the above-mentioned ceramics, and ceramics bonded by silicon and silicate compound may also be used, and for example, a ceramic material made by blending metal silicon with silicon carbide is suitably used.

Moreover, with respect to the average pore diameter and the porosity of the porous ceramic member, not particularly limited, the same average pore diameter and porosity as those used in the honeycomb structural body of the first mode are desirably used, and with respect to the particle size of the ceramic material to be used for manufacturing the porous ceramic member, not particularly limited, the same particle size as that of the honeycomb structural body of the first mode may be used.

Here, the honeycomb structural body of the second mode may be used as a catalyst supporting member, and in this case, a catalyst for converting exhaust gases is supported on the honeycomb structural body.

With respect to the catalyst for converting exhaust gases, the same catalyst for converting exhaust gases as used for the catalyst supporting member of the honeycomb structural body of the first mode, and the like may be used.

In the same manner as the honeycomb structural body of the first mode, the catalyst for converting exhaust gases may be supported on the honeycomb structural body of the second mode uniformly inside the through hole, or may be supported on only one area inside the through hole, or may be supported in a manner so as to have a density gradient from one of the gas flow-in side and gas flow-out side toward the other side.

Furthermore, in the same manner as the honeycomb structural body of the first mode, the honeycomb structural body of the second mode may have a structure in which an end portion of each through hole is sealed, with a catalyst for converting exhaust gases being supported thereon, so as to function as a honeycomb filter for purifying exhaust gases.

In this case, the catalyst for converting exhaust gases may be supported on both of the gas flow-in cell and the gas flow-out cell, or on only one of the cells; and, more desirably, the catalyst is supported on only the gas flow-out cell. Thus, the resulting structure is allowed to effectively exert both of the functions as the honeycomb filter for purifying exhaust gases and the functions of converting exhaust gases.

In the case where a catalyst is supported on the honeycomb structural body of the second mode in the same manner as the honeycomb structural body of the first mode, in order to improve the reactivity of the catalyst, the honeycomb structural body may have thin wall with a high density so that the specific surface area is increased. This structure also makes it possible to improve the temperature raising property by utilizing exhaust gases.

When the reactivity of the catalyst is improved in the same manner as the honeycomb structural body of the first mode, in particular, when the thickness of the partition wall is made thinner, the strength of the end portions is desirably improved so as to improve erosion resistant property.

Moreover, in the honeycomb structural body of the second mode, as shown in Figs. 2 and 3, a sealing material layer is desirably formed on the peripheral portion thereof, and in this case, with respect to the material for forming the sealing material layer, the same material as that of the sealing material layer for forming the honeycomb structural body of the first mode, and the like may be used.

Referring to Figs. 2 and 3, description will be given of a method (hereinafter, referred to as a second manufacturing method) for manufacturing the honeycomb structural body of the second mode in which a plurality of porous ceramic members are combined with one another through sealing material layer.

More specifically, first, a ceramic laminated body to be used for forming a ceramic block 25 is manufactured.

The ceramic laminated body has a pillar-shaped structure inwhichpillar-shapedporous ceramic members 30, each comprising a number of through holes 31 that are placed in parallel with one another in the length direction with a partition wall 33 interposed therebetween, are combined with one another through sealing material layer 23.

In order to manufacture a porous ceramic member 30, first, a binder and a dispersant solution are added to the above-mentioned ceramic powder to prepare a mixed composition.

With respect to the method for preparing the mixed composition, not particularly limited, for example, the same method as the method for preparing the material paste explained in the first manufacturing method may be used.

Next, the mixed composition is further mixed by using an attritor or the like, and after having been sufficiently mixed and kneaded by using a kneader or the like, this is molded into a pillar-shaped raw formed body having approximately the same shape as the porous ceramic member 30 shown in Fig. 3 through an extrusion-molding process or the like.

The formed body is dried by using a microwave drier or the like, and a mouth-sealing process is carried out thereon so that predetermined through holes are filled with plugs, and the resulting formed body is again subjected to a drying process using a microwave drier or the like.

With respect to the plug, not particularly limited, for example, the same material as the mixed composition may be used.

Next, the ceramic formed body that has been subjected to the mouth-sealing process is subjected to a degreasing process by heating it at a temperature in a range from about 300 to 650°C in an oxygen-containing atmosphere so that the binder and the like are volatilized, as well as being decomposed and eliminated, to allow only the ceramic powder to remain therein.

Next, the formed body that has been degreased is sintered by heating it at about 1400 to 2200°C in an inert gas atmosphere such as nitrogen, argon and the like so that the ceramics powder is sintered to produce a porous ceramic member 30.

Thereafter, sealing material paste, which is used for forming a sealing material layer 23, is applied to side faces 30a and 30b of the porous ceramicmember 30 with a uniform thickness so that a paste layer is formed, and a process for successively laminating another porous ceramic member 30 on this paste layer is repeated so that a pillar-shaped ceramic laminated body having a predetermined size is formed.

Next, this ceramic laminated body is heated at a temperature in a range from 50 to 100°C for about one hour so that the paste layer is dried and solidified to form a sealing material layer 23, and the peripheral portion thereof is cut by, for example, a diamond cutter and the like into a shape as shown in Fig. 2; thus, a ceramic block 25 is manufactured.

With respect to the material for preparing the sealing material paste to form the sealing material layer 23, not particularly limited, for example, the same material as the sealing material paste explained in the first manufacturing method may be used.

Moreover, prior to cutting the peripheral portion of the dried ceramic laminated body, the ceramic laminated body may be cut in a direction perpendicular to the length direction, if necessary.

By using this process, the length of the honeycomb structural body to be manufactured in the length direction is set to a predetermined length, and the end faces of the honeycomb structural body are flattened so that, in particular, the flatness of the end faces is set to 2 mm or less.

Here, the length direction of the ceramic laminated body refers to a direction in parallel with the through holes of the porous ceramic members constituting a ceramic laminated body, and even in the case where a number of porous ceramic members are laminated and bonded in a process for forming a ceramic laminated body so that the length of a face formed by the end faces of the porous ceramic member becomes longer than the length of the side face thereof, the direction in parallel with the side face of the porous ceramic member is referred to as the length direction of the ceramic laminated body.

With respect to the method for cutting the ceramic laminated body in perpendicular to the length direction thereof, not particularly limited, for example, a method in which the ceramic laminated body is cut perpendicular to the length direction of the ceramic laminated body at a portion in which all the porous ceramic members are laminated in the vicinity of an end face of the ceramic laminated body by using a diamond cutter or the like may be used.

Next, a sealingmaterial layer 24 is formed on the periphery of the ceramic block 25 thus manufactured. Thus, a honeycomb structural body in which a plurality of porous ceramic members are combined with one another through sealing material layer is formed.

With respect to the method for forming the sealingmaterial layer, not particularly limited, the same method as the method explained in the manufacturing method for the honeycomb structural body may be used.

By using the above-mentioned processes, a honeycomb structural body according to the second mode is manufactured.

Here, each of the honeycomb structural bodies thus produced by using the first and second manufacturing methods may be used as a catalyst supporting member for a catalyst for converting exhaust gases. In other words, in the case where the honeycomb structural body is used as the catalyst supporting member, a catalyst for converting exhaust gases is supported thereon so that the honeycomb structural body is allowed to exert functions for converting toxic components such as HC, CO, NOx and the like contained in exhaust gases, and gases derived from organic components slightly contained in the honeycomb structural body.

Moreover, in the case where a catalyst for converting exhaust gases is applied to the inside of the through holes with one of ends of each through hole being sealed, the honeycomb structural body is allowed to function as a particle collecting filter for collecting particulates in exhaust gases, and also to have a function of converting toxic components such as HC, CO, NOx and the like in exhaust gases and gases generated from organic components slightly contained in the honeycomb structural body.

Next, description will be given of the honeycomb structural body according to the second aspect not of the present invention.

The honeycomb structural body according to the second aspect is a pillar-shaped honeycomb structural body mainly made of inorganic fibers and comprising a plurality of through holes that are placed in parallel with one another in the length direction with a wall portion interposed therebetween, wherein the inorganic fibers comprise 60 to 85% by weight of silica and 15 to 40% by weight of at least one kind of compound selected from the group consisting of an alkali metal compound, an alkali-earth metal compound and a boron compound.

The above-mentioned honeycomb structural body contains at least one kind of compound selected from the group consisting of an alkali metal compound, an alkali-earth metal compound and a boron compound as inorganic fibers; therefore, the ionization tendency is high, the heat resistance is superior, and the solubility to physiological salt solution is high. Consequently, upon manufacturing, using or discarding the honeycomb structural body and the like, even if the material thereof is taken into the body, it will be dissolved and discharged out of the body; thus, it becomes possible to ensure safety.

Moreover, since the above-mentioned inorganic fibers are used in the honeycomb structural body, it becomes possible to provide sufficient NOx absorbing and storing effects thereto.

The reason for this is not clear, but presumably because, since the alkali metal compound, the alkali earth metal compound or the boron compound is allowed to react with NOx to generate a nitrate, the NOx is absorbed and stored as the nitrate.

Furthermore, in the case where a catalyst is supported on the honeycomb structural body, since the above-mentioned inorganic fibers are used, it becomes possible to suppress the catalyst from being poisoned by sulfur (S), sulfur oxides (SOx) and phosphor (P), and consequently to prevent the catalyst functions from deteriorating.

The reason for this is not clear, but presumably because the alkali metal compound, the alkali earth metal compound or the boron compound is allowed to react with sulfur, sulfur oxides and phosphor in exhaust gases to generate sulfates and phosphates; thus, it becomes possible to prevent the catalyst, such as platinum, rhodium and the like, from reacting with sulfur, sulfur oxides and phosphor.

The honeycomb structural body according to the second aspect is mainly made of inorganic fibers, and the inorganic fibers comprise 60 to 85% by weight of silica and 15 to 40% by weight of at least one kind of compound selected from the group consisting of an alkali metal compound, an alkali-earth metal compound and a boron compound.

Specific examples of the above-mentioned silica, alkali metal compound, alkali earth metal compound and boron compound are the same as those used in the first aspect.

With respect to the average fiber length of the inorganic fibers, a desirable lower limit value is set to 0.1 mm and a desirable upper limit value is set to 100 mm, more desirably, the lower limit value is set to 0.5 mm and the upper limit value is set to 50 mm.

With respect to the average fiber diameter of the inorganic fibers, a desirable lower limit value is set to 1 $\mu$m, and a desirable upper limit value thereof is set to 30 $\mu$m, more desirably, the lower limit value is set to 2 $\mu$m and the upper limit value is set to 10 $\mu$m.

In addition to the above-mentioned inorganic fibers, the honeycomb structural body may contain a binder used for combining the inorganic fibers with one another so as to maintain a predetermined shape.

With respect to the above-mentioned binder, not particularly limited, inorganic glass, such as silicate glass, silicate alkali glass, borosilicate glass and the like, alumina sol, silica sol, titania sol and the like may be used.

In the case where the binder is contained, a desirable lower limit is set to 5% by weight and a desirable upper limit is set to 50% by weight; more desirably, the lower limit value is set to 10% by weight and the upper limit value is set to 40% by weight.

With respect to the apparent density of the honeycomb structural body, a desirable lower limit value is set to 0.05 g/cm$^3$ and a desirable upper limit value is set to 1.00 g/cm$^3$; more desirably, the lower limit value is set to 0.10 g/cm$^3$ and the upper limit value is set to 0.50 g/cm$^3$.

With respect to the porosity of the honeycomb structural body, a desirable lower limit value is set to 60% by capacity and a desirable upper limit value is set to 98% by capacity; more desirably, the lower limit value is set to 80% by capacity and the upper limit value is set to 95% by capacity.

Here, the apparent density and porosity can be measured through known methods, such as a weighing method, Archimedes method, a measuring method using a scanning electronic microscope (SEM), and the like.

On the inorganic fibers forming the honeycomb structural body, a catalyst made of a noble metal, such as platinum, palladium, rhodium and the like, may be supported. In addition to the noble metals, an element such as an alkali metal (Group 1 in Element Periodic Table), an alkali earth metal (Group 2 in Element Periodic Table), a rare-earth element (Group 3 in Element Periodic Table) and a transition metal element, may be added thereto.

When such a catalyst is supported thereon, the filter using the honeycomb structural body is allowed to function as a filter capable of collecting particulates in exhaust gases, and also to function as a catalyst converter for converting CO, HC, NOx and the like contained in exhaust gases.

The honeycomb structural body in which the above-mentioned catalyst made of the noble metal is supported is allowed to function as a gas converting device in the same manner as the conventionally known DPFs (Diesel Particulate Filters) with catalyst. Therefore, the detailed explanation of the case in which the honeycomb structural body also serves as a catalyst converter is omitted.

The honeycomb structural body may contain a slight amount of inorganic particles and metal particles. Examples of the inorganic particles may include carbides, nitrides, oxides and the like. Specific examples thereof may include inorganic powder made of silicon carbide, silicon nitride, boron nitride, alumina, silica, zirconia, titania or the like, and the like. Examples of the metal particles may include metallic silicon, aluminum, iron, titanium and the like. Each of these may be used alone, or two or more kinds of these may be used in combination.

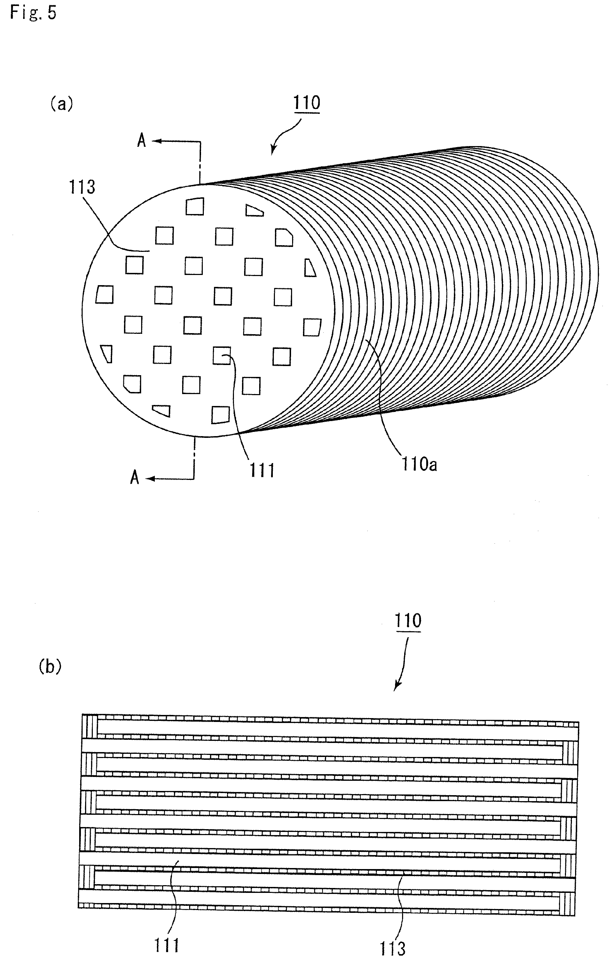

Next, referring to the drawings, description will be given of embodiments of a honeycomb structural body according to the second aspect. Fig. 5(a) is a perspective view that schematically shows a specific example of the honeycomb structural body of the second aspect, and Fig. 5(b) is a cross-sectional view taken along line A-A of Fig. 5(a).

As shown in Fig. 5, the honeycomb structural body according to the second aspect is prepared as a laminated body formed by laminating sheet-shaped members 110a having a thickness in a range from about 0.1 to 20 mm in the length direction, and the sheet-shaped members 110a are laminated so that the through holes 111 are superposed on one another in the length direction.

Here, the expression, "the through holes are superposed on one another in the length direction" refers to the fact that the sheet-shaped members are laminated so that the corresponding through holes formed in adjacent sheet-shapedmembers are allowed to communicate with each other.

The sheet-shaped members are easily obtained through a paper-making method and the like, and by laminating them, a honeycomb structural body made of a laminated body is prepared. The laminated body may be formed by bonding the members using an inorganic adhesive or the like, or may be formed by simply laminating the members physically.

Upon manufacturing the laminated body, the sheet-shaped members are directly laminated in a casing (a cylindrical member made of metal) to be used when attached to an exhaust pipe, and a pressure is applied thereto so that a honeycomb structural body is formed. The forming method and laminating method for the sheet-shaped members, and the like will be described later.

A honeycomb structural body 110 has a cylindrical structure in which a large number of bottomed holes 111, with one of ends of through holes being sealed, are placed in parallel with one another in the length direction with a wall portion 113 interposed therebetween so as to function as a filter.

In other words, as shown in Fig. 5(b), each of the bottomed holes 111 is sealed at one of ends of its exhaust gas inlet side and outlet side so that exhaust gases that have entered one bottomed hole 111 are discharged from another bottomed hole 111 after having always passed through the partition wall 113 that separates the bottomed holes 111; thus, the honeycomb structural body is allowed to function as a filter.

With respect to the thickness of the wall portion, a desirable lower limit value is set to 0.2 mm and a desirable upper limit value is set to 10.0 mm; more desirably, the lower limit value is set to 0.3 mm and the upper limit value is set to 6.0 mm.

With respect to the density of through holes on a cross section perpendicular to the length direction of the honeycomb structural body, a desirable lower limit value is set to 0.16 piece/cm$^2$ (1.0 piece/in$^2$) and a desirable upper limit value is set to 62 pcs/cm$^2$ (400 pcs/in$^2$); more desirably, the lower limit value is set to 0. 62 piece/cm$^2$ (4.0 pcs/in$^2$) and the upper limit value is set to 31 pcs/cm$^2$ (200 pcs/in$^2$).

Here, the size of the through hole is desirably set in a range from 1.4 mm x 1.4 mm to 16 mm x 16 mm.

In the honeycomb structural body 110 shown in Fig. 5, the shape is prepared as a cylindrical shape; however, not particularly limited to the cylindrical shape, the honeycomb structural body according to the second aspect may have any desired pillar shape, such as an elliptical column shape, a rectangular pillar shape and the like, and any size.

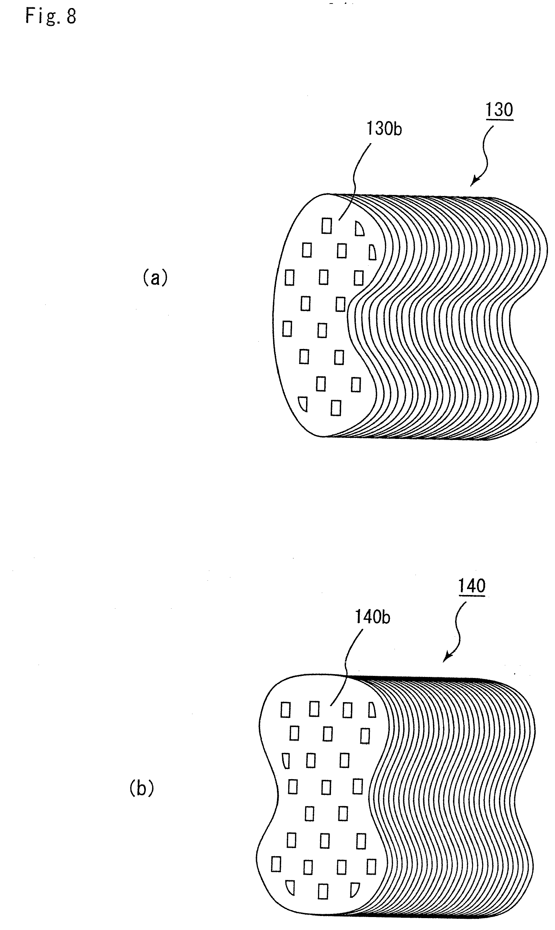

Moreover, in the case where the filter is installed right under the engine, the filter space is extremely limited, and a complex filter shape is required; however, in the case of the exhaust gas purifying device of the present invention, even a complex shape, such as a filter 130 with a concave portion on one side as shown in Fig. 8(a) and a filter 140 with concave portions on two sides as shown in Fig. 8(b), can be easily formed by superposing sheets 130a or 140a obtained from paper-making process in the length direction. Moreover, since the sheets 130a or 140a obtained from paper-making process are superposed in the length direction, even a curved shape in the length direction and a deformed shape that is gradually changed in the length direction can be easily formed.

Here, the regenerating process of a filter using the honeycomb structural body corresponds to a burning process for particulates, and with respect to the regenerating method for the honeycomb structural body, a method in which the honeycomb structural body is heated by a heating means installed on the exhaust gas inlet side maybe used, or a method in which an oxidizing catalyst is supported on the honeycomb structural body so that heat, generated by oxidation of hydrocarbon or the like in exhaust gases due to the oxidizing catalyst, is utilized to carry out the regenerating process in parallel with the converting process for exhaust gases may be used. Moreover, another method in which a catalyst that directly oxidizes solid-state particulates is placed on the filter, or still another method in which an oxidizing catalyst, placed on the upstream side of the filter, is used to generate $NO_2$ by oxidizing NOx so that the particulates are oxidized by using the resulting $NO_2$, may be used.

Referring to Fig. 6, description will be given of a manufacturing method for a honeycomb structural body according to the second aspect.

(1) Catalyst applying process to inorganic fibers

Inorganic fibers (the same inorganic fibers as those forming the sealing material layer of the honeycomb structural body according to the first aspect), which contain 60 to 85% by weight of silica and 15 to 40% by weight of at least one kind of compound selected from the group consisting of an alkali metal compound, an alkali-earth metal compound and a boron compound, are impregnated with a slurry of an oxide on which a catalyst made from a noble metal such as Pt and the like is supported, and then raised from the slurry and heated to prepare inorganic fibers to which the catalyst is adhered. Here, inorganic fibers may be impregnated with a slurry containing a catalyst, and raised and heated so that the catalyst may be directly adhered to the inorganic fibers. The amount of the supported catalyst is desirably set in a range from 0.01 to 1 g/10 g of inorganic fibers. When the honeycomb structural body having no catalyst supported thereon is manufactured, this process is omitted.

In this manner, in the honeycomb structural body according to the second aspect, since a catalyst is adhered to the inorganic fibers serving as a constituent material prior to forming the honeycomb structural body, the catalyst can be adhered to the honeycomb structural body in a manner so as to be dispersed more uniformly. Consequently, the resulting honeycomb structural body makes it possible to improve the burning function of particulates and the converting function for toxic gases. Here, the catalyst applying process may be carried out after sheets are obtained from paper-making process.

(2) Preparation process for slurry for paper-making

Next, the inorganic fibers bearing the catalyst, obtained from the step (1), were dispersed in water (1 L) at a rate of 5 to 100 g, and in addition to these, 10 to 40 parts by weight of an inorganic binder such as silica sol or the like, and 1 to 10 parts by weight of an organic binder such as an acrylic latex or the like were added to 100 parts by weight of the inorganic fibers, and to this were further added a slight amount of a coagulant such as aluminum sulfate or the like and an aggregation agent such as polyacrylic amide or the like, if necessary, and sufficiently stirred to prepare a slurry for paper-making.

Examples of the organic binder may include methyl cellulose, carboxy methylcellulose, hydroxy ethylcellulose, polyethylene glycol, phenolic resin, epoxy resin, polyvinyl alcohol, styrene butadiene rubber and the like.

(3) Paper-making process

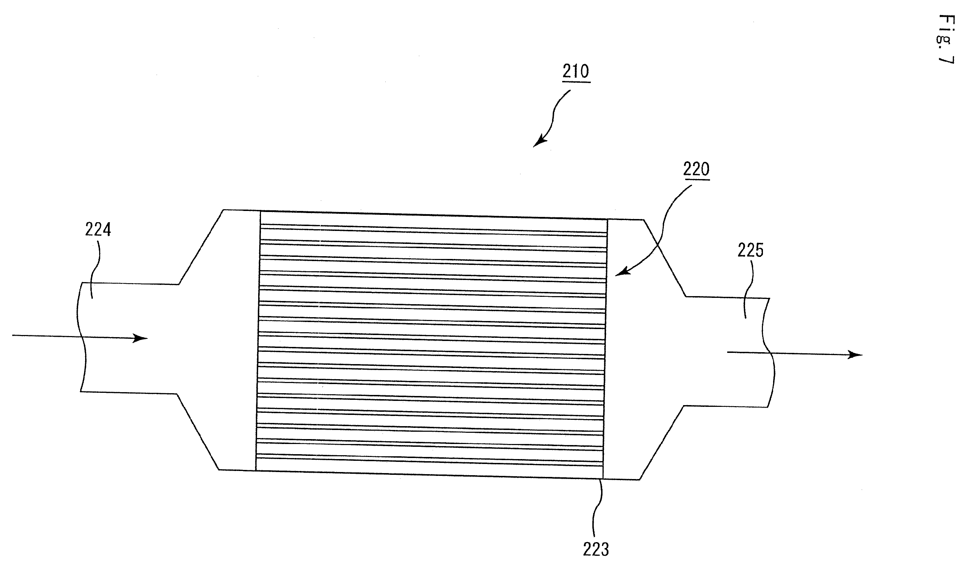

The slurry, obtained in the step (2), was subjected to a paper-making process by using a perforated mesh in which holes having a predetermined shape are formed with mutually predetermined intervals, and the resulting matter was dried at a temperature in a range from about 100 to 200°C so that sheets 110a obtained from paper-making process having a predetermined thickness as shown in Fig. 7(a), were obtained. The thickness of each sheet 110a obtained from the paper-making process was desirably set in a range from 0.1 to 20 mm.

By using, for example, a mesh with holes having a predetermined shape in a checkedpattern, it is possible to obtain sheets 110b from paper-making process to be used at two ends. In other words, by using some of these sheets obtained from paper-making process at the two ends, it is possible to obtain a honeycomb structural body functioning as a filter without the necessity of having to seal predetermined through holes at the two ends after forming the through holes.

(4) Laminating process

By using a cylindrical casing 123 having a pressing member on one side as shown in Fig. 7(b), several sheets 110b obtained from paper-making process for both end portions are laminated inside the casing 123, and a plurality of sheets 110a obtained from paper-making process for inside are then laminated therein. Then, several sheets 110b obtained from paper-making process for both end portions are lastly laminated, and after having been pressed, another pressing member is also put on the other side and secured thereon so that a honeycomb structural body that has been subjected to a canning process is prepared. In this process, the sheets 110a, 110b obtained from paper-making process are laminated so that the through holes are superposed on one another.

With respect to the application of the honeycomb structural body according to the second aspect, although not particularly limited, it is desirably used for exhaust gas purifying devices for use in vehicles.

Fig. 7 is a cross-sectional view that schematically shows one example of an exhaust gas purifying device for use in vehicles, which is provided with the honeycomb structural body according to the second aspect.

As shown in Fig. 7, an exhaust gas purifying device 210 is mainly constituted by the honeycomb structural body 220 according to the second aspect and a casing 223 that covers the external portion of the honeycomb structural body 220; and an introducing pipe 224 that is connected to an internal combustion system such as an engine or the like is connected to the end of the casing 223 on the side to which exhaust gases are directed, and an exhaust pipe 225 externally coupled is connected to the other end of the casing 223. Here, in Fig. 7, arrows indicate flows of exhaust gases.

In the exhaust gas purifying device 210 having the above-mentioned arrangement, exhaust gases, discharged from the internal combustion system such as an engine or the like, are directed into the casing 223 through the introducing pipe 224, and allowed to flow into the honeycomb structural body 220 and pass through the wall portion (partition wall) ; thus, the exhaust gases are purified, with particulates thereof being collected in the wall portion (partition wall), and are then discharged outside through the exhaust pipe 225.

After a large quantity of particulates have been accumulated on the wall portion (partition wall) of the honeycomb structural body 220 to cause an increase in pressure loss, the honeycomb structural body 220 is subjected to a regenerating process by using the above-mentioned means.

In the case where the honeycomb structural body according to the second aspect is formed by simply laminating sheets obtained from paper-making process physically in this manner, even if a certain degree of temperature distribution occurs in the honeycomb structural body when installed in an exhaust passage, a temperature distribution per one sheet is comparatively small so that the sheets are less susceptible to cracks and the like.

Moreover, in the case where, in the paper-making process, the inorganic fibers are aligned approximately in parallel with the main face of the sheets obtained from paper-making process upon forming the laminated body, more inorganic fibers are aligned along a face perpendicular to the forming direction of the through holes in comparison with those aligned on a face in parallel with the forming direction of the through holes. Consequently, exhaust gases are allowed to more easily pass through the wall portion of the honeycomb structural body; thus, it becomes possible to reduce the initial pressure loss, and also to allow particulates to pass through deeper layers inside the wall portion. Therefore, it is possible to prevent formation of cake layers on the surface of the partition wall, and consequently to suppress an increase in the pressure loss upon collecting particulates.

Moreover, since the rate of exhaust gases flowing in parallel with the aligned direction of the inorganic fibers increases, the chance of the particulates coming into contact with the catalyst adhered to the inorganic fibers increases, making it possible to easily burn the particulates.

Furthermore, in the case where sheets obtained from paper-making process, which have different dimensions in the holes, are formed so that these are laminated, the bottomed holes are allowed to form irregularities; thus, bottomed holes having a larger surface area can be formed. Therefore, the filtering area is made larger, making it possible to reduce a pressure loss upon collecting particulates. With respect to the shape of the holes, not particularly limited to a square and a quadrangular shape, any desired shape, such as a triangle, a hexagon, an octagon, a dodecagon, a round shape an elliptical shape and the like, may be used.

Next, description will be given of the exhaust gas purifying device according to the third aspect, which is an aspect of the present invention.

The exhaust gas purifying device according to the third aspect of the present invention has the features of claim 4.

The exhaust gas purifying device contains at least one kind of compound selected from the group consisting of an alkali metal compound, an alkali-earth metal compound and a boron compound as inorganic fibers; therefore, the ionization tendency is high, the heat resistance is high, and the solubility to physiological salt solution is high. For this reason, upon manufacturing, using or discarding the honeycomb structural body and the like, even if the material thereof is taken into the body, it will be dissolved and discharged out of the body; thus, it becomes possible to ensure safety.

Moreover, since the above-mentioned inorganic fibers are used in the honeycomb exhaust gas purifying device, it becomes possible to provide sufficient NOx absorbing and storing effects thereto.

The reason for this is not clear, but presumably because, since the alkali metal compound, the alkali earth metal compound or the boron compound is allowed to react with NOx to generate a nitrate, the NOx is absorbed and stored as the nitrate.

Furthermore, in the case where a catalyst is supported on the exhaust gas purifying device, since the above-mentioned inorganic fibers are used, it becomes possible to suppress the catalyst from being poisoned by sulfur (S), sulfur oxides (SOx) and phosphor (P), and consequently to prevent the catalyst functions from deteriorating.

The reason for this is not clear, but presumably because the alkali metal compound, the alkali earth metal compound or the boron compound is allowed to react with sulfur, sulfur oxides and phosphor in exhaust gases to generate sulfates and phosphates; thus, it becomes possible to prevent the catalyst, such as platinum, rhodium and the like, from reacting with sulfur, sulfur oxides and phosphors.

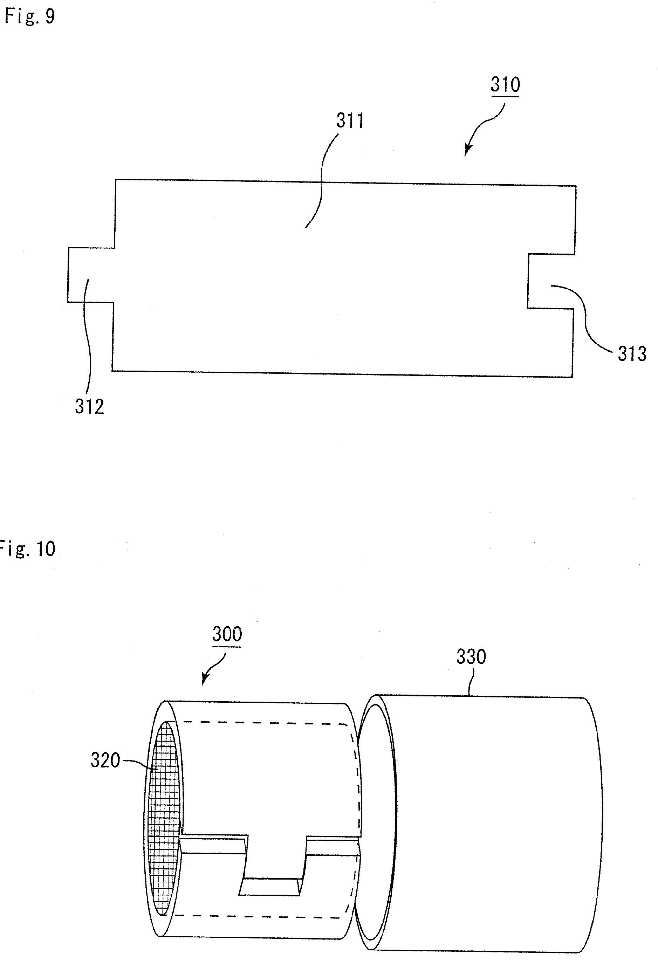

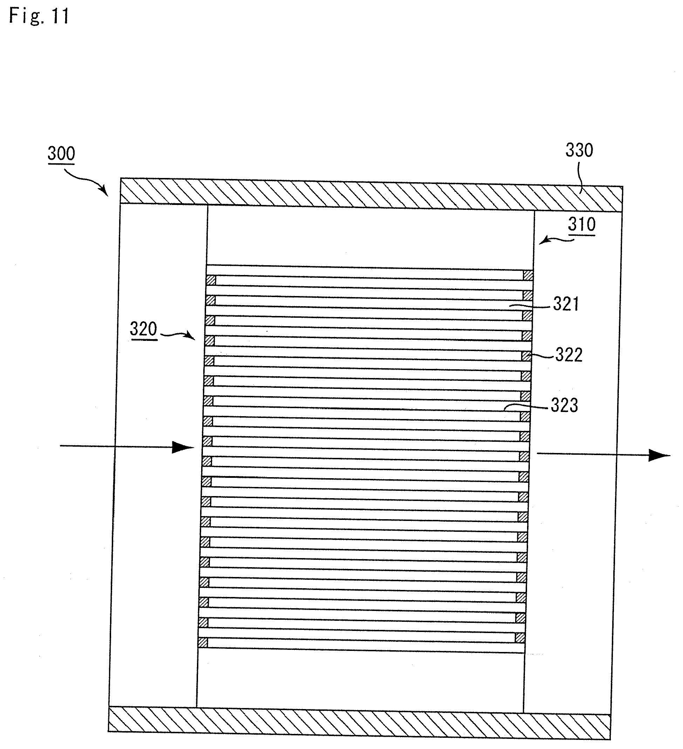

Referring to the drawings, description will be given of the exhaust gas purifying device according to the third aspect of the present invention. Fig. 9 is a plan view that schematically shows a holding sealing material that is used for the exhaust gas purifying device according to the third aspect of the present invention; Fig. 10 is an exploded perspective view that schematically shows one example of the exhaust gas purifying device according to the third aspect of the present invention; and Fig. 11 is a cross-sectional view that schematically shows one example of the exhaust gas purifying device of the present invention.

As shown in Fig. 11, the exhaust gas purifying device 300 according to the third aspect of the present invention is mainly constituted by a cylindrical honeycomb structural body 320, a cylindrical metal shell 330 that covers the peripheral portion of the honeycomb structural body 320 in the length direction, and a holding sealing material 310 that is placed between the honeycomb structural body 320 and the metal shell 330, and an introducing pipe that is connected to an internal combustion system such as an engine or the like is connected to the end of the metal shell 330 on the side to which exhaust gases are directed, and an exhaust pipe externally coupled is connected to the other end of the metal shell 330. Here, in Fig. 3, arrows indicate flows of exhaust gases.

The honeycomb structural body 320 is made of a porous ceramic member in which a number of through holes 321 are placed in parallel with one another in the length direction, and each of the through holes 321 has one of its ends on the inlet-side and outlet-side of exhaust gases sealed with plugs 322; thus, exhaust gases that have entered one of the through holes 321 are allowed to flow out of another through hole 321 after always passing through the partition wall 323 that separates the corresponding through holes 321. The honeycomb structural body 320, which has through holes 321 each of which has one of its ends on the inlet-side and outlet-side of exhaust gases sealed with plugs 322, is allowed to function as a diesel particulate filter (DPF) that collects particulates in exhaust gases.

Here, the honeycomb structural body to be used in the exhaust gas purifying device according to the third aspect of the present invention may function as a catalyst converter, and in this case, although a catalyst capable of converting CO, HC, NOx and the like in exhaust gases needs to be supported thereon, only the through holes without sealed ends may be simply used. Moreover, by suppporting a catalyst capable of converting CO, HC, NOx and the like in exhaust gases on the honeycomb structural body 320 having through holes 321 each of which has one of its ends on the inlet-side and outlet-side of exhaust gases sealed with plugs 322, the honeycomb structural body 320 is allowed to function as a filter capable of collecting particulates in exhaust gases, and also to function as a catalyst converter for converting CO, HC, NOx and the like contained in exhaust gases.

With respect to the honeycomb structural body 320 shown in Fig. 11, the cross-sectional shape is prepared as a round shape; in the exhaust gas purifying device according to the third aspect of the present invention, however, not particularly limited to the round shape, the cross-sectional shape of the honeycomb structural body may have any desired shape, such as an elliptical shape, an elongated round shape, a polygonal shape and the like. In this case, the cross-sectional shape of the metal shell is desirably changed in response to the cross-sectional shape of the honeycomb structural body.

Moreover, the honeycomb structural body 320 may have an integrally molded structure, or a structure in which a plurality of porous ceramic members are combined with one another through adhesive layers.

Furthermore, a sealing material layer may be formed on the peripheral portion of the honeycomb structural body 320 so as to prevent exhaust gases from leaking through the peripheral portion.

As shown in Figs. 9 and 10, the holding sealing material 310 has a structure in which protruding portions 312 are formed on the short side of a base material 311 having approximately a rectangular shape, with recessed portions 313 being formed on the other short side so that, when the holding sealingmaterial 310 is wound around the peripheral portion of the honeycomb structural body 320, each protruding portion 312 and each recessed portion 313 are just fitted to each other; thus, it becomes possible to wind the holding sealingmaterial 310 around the peripheral portion of the honeycomb structural body 320 accurately without any deviations.

Here, the shape of the holding sealing material 310 is not particularly limited as long as it is formed into a mat shape, and, for example, the holding sealing material having a plurality of protruding portions and recessed portions may be used; alternatively, the holding sealing material having having none of protruding portions and recessed portions may be used. Moreover, with respect to the combinations of the shapes of the protruding portions 312 and the recessed portions 313, in addition to a combination of a rectangular shape, as shown in Fig. 1, a combination of triangles and a combination of semi-circular shapes may be utilized.

The holding sealing material 310, which has been wound around the peripheral face of the pillar-shaped honeycomb structural body 320, is housed into the cylindrical metal shell 330 to prepare the exhaust gas purifying device 300. When housed into the metal shell 330, the holding sealing material 310 is compressed in the thickness direction; thus, a repulsion (surface pressure), which resists against the compression power, is generated and the honeycomb structural body 320 is secured into the metal shell 330 through this repulsion.

Next, description will be given of constituent members of the exhaust gas purifying device according to the third aspect of the present invention. The holding sealing material is mainly composed of inorganic fibers.

Specific examples of the inorganic fibers are the same as those used for forming the sealing material layer of the honeycomb structural body according to the first aspect.

With respect to the fiber tensile strength of the inorganic fibers, a desirable lower limit thereof is 1. 2 GPa, and a desirable upper limit thereof is 200 GPa. The fiber tensile strength of less than 1.2 GPa makes the inorganic fibers fragile to a tensile force and a bending force; thus, they might be broken easily; in contrast, the fiber tensile strength exceeding 200 GPa causes an insufficient cushion property. The lower limit is desirably set to 1.5 GPa, and the upper limit is desirably set to 150 GPa.

With respect to the average fiber length of the inorganic fibers, a desirable lower limit value is set to 0.5 mm and a desirable upper limit value is set to 100 mm. The average fiber length of less than 0.5 mm tends to cause fibers to be absorbed in the respiratory system. Moreover, the fibers are no longer allowed to exert features as fibers; thus, a suitable tangle for fibers no longer takes place, failing to provide a sufficient surface pressure. The average fiber length exceeding 100 mm tends to make the tangle for fibers too strong, and the fibers tend to aggregate unevenly when they are formed into a mat-shaped formed body; thus, the dispersion in the surface pressure value may become too large. The lower limit of the average fiber length of the inorganic fibers is more desirably set to 10 mm, and the upper limit thereof is more desirably set to 40 mm.

With respect to the average fiber diameter of the inorganic fibers, a desirable lower limit value is set to 0.3 $\mu$m and a desirable upper limit value is set to 25 $\mu$m. The average fiber diameter of less than 0.3 $\mu$m tends to make the strength of the fibers too low, failing to provide a sufficient surface pressure, and also tends to cause fibers to be absorbed in the respiratory system. The average fiber diameter exceeding 25 $\mu$m tends to cause a reduction in the gas permeability resistance when they are formed into a mat-shaped formed body; thus, the sealing property deteriorates and the breaking strength is lowered due to an increase in the number of small defects caused by an increase in the fiber surface area. The lower limit value of the average fiber diameter of the inorganic fibers is more desirably set to 0.5 $\mu$m, and the upper limit value thereof is more desirably set to 15 $\mu$m.

The dispersion in the fiber diameter of the inorganic fibers is desirably set within $\pm 3$ $\mu$m with respect to the average fiber diameter. The dispersion in the fiber diameter exceeding $\pm 3$ $\mu$m tends to cause unevenly accumulated fibers, making the dispersion in the surface pressure value too high. The dispersion in the fiber diameter of the organic fibers is more desirably set within $\pm 2$ $\mu$m.

The shot content of the inorganic fibers is desirably set to 50% by weight or less. The shot content exceeding 50% by weight tends to cause the dispersion in the surface pressure value to become too high. More desirably, the shot content is set to 30% by weight or less. Particularly desirably, the shot content is set to 0% by weight; that is, the inorganic fibers contain no shots.

In addition to a round shape, the cross-sectional shape of the inorganic fibers may have a shape such as an elliptical shape, an elongated round shape, an approximately triangular shape, a rectangular shape and the like.

The holding sealing material contains an organic binder.

Examples of the organic binder may include a styrene-butadiene-based resin, an acrylonitrile-butadiene-based resin and the like.

Each of the organic binders may be used alone, or two or more kinds of these may be used in combination.

The styrene-butadiene-based resin is obtained by copolymerizing styrene monomer, butadiene monomer and the like. Moreover, the acrylonitrile-butadiene-based resin is obtained by copolymerizing acrylonitrile monomer, butadiene monomer and the like.

The above-mentioned organic binder has a coat-film strength of 5 MPa or more at normal temperature, and the lower limit value of the coated-film strength is more desirably set to 10 MPa.

By using an organic binder having a coat-film strength of 5 MPa or more at normal temperature, the exhaust gas purifying device is allowed to have an improved coefficient of friction between the surface of a holding sealing material and the surface of a metal shell so that the honeycomb structural body is firmly secured onto the metal shell from a starting stage of its use. This is presumably because, since the organic binder has a higher coat-film strength in comparison with a conventional organic binder, and is less susceptible to rupturing and extension by an externally applied force, the strength of bonded portions through the organic binder is improved so that the bonding strength between the inorganic fibers and the metal shell, the bonding strength between the mutual inorganic fibers and the bonding strength between the inorganic fibers and the honeycomb structural body are improved.

The coat-film strength is given as a tensile breaking strength measured through the following processes in which a dumb-bell shaped test sample having a thickness of 0.4 mm, made from an organic binder, is subjected to a tension test using an instron-type tension tester at a rate of 300 mm/min.

Here, the test sample is manufactured by using the following processes : latex that is a raw material for an organic binder is poured onto a glass plate with a frame, and this is left at room temperature and dried to form a coated film.

The decomposition temperature of the organic binder is desirably set to 200°C or more. The decomposition temperature of less than 200°C causes the organic binder to be burned and eliminated at an early stage of use of the exhaust gas purifying device in which the holding sealing material 310 is used; thus, the effect of the present invention, that is, the firmly secured state of the honeycomb structural body 320 onto the metal shell 330 is not obtained sufficiently during the use of the exhaust gas purifying device.

Here, in the case where an exhaust gas purifying device using the holding sealing material 310 is heated to a temperature of 200°C or more, since the coefficient of friction on the metal shell 330 side is improved by oxidation and the like of the metal shell 330, it becomes possible to firmly secure the honeycomb structural body 320 onto the metal shell 330 even when the organic binder has been burned and eliminated.

With respect to the content of the organic binder, a desirable upper limit value is set to 10% by weight. The value exceeding 10% by weight tends to cause a failure in sufficiently reducing the total amount of decomposed gas of the organic binder generated during the use at high temperatures. The upper limit of the content of the organic binder to the entire holding sealing material of the organic binder is desirably set to 5% by weight, more desirably 1% by weight.

Additionally, even when its content is set to 1% by weight or less, the organic binder makes it possible to improve the coefficient of friction with respect to the metal shell.

With respect to the thickness of the holding sealing material prior to the state where it is housed in the metal shell, a desirable lower limit value thereof is set to 1.01 times the gap formed by the outer diameter of the honeycomb structural body and the inner diameter of the metal shell, and a desirable upper limit value thereof is set to 4.0 times the gap thereof. The thickness of the holding sealing material of less than 1.01 times tends to cause a displacement and a rattling of the honeycomb structural body with respect to the metal shell. In this case, since it is not possible to obtain a superior gas sealing property, exhaust gases tend to leak from the gap portion, resulting in an insufficient gas purifying operation. In contrast, the thickness of the holding sealing material exceeding 4.0 times the gap thereof tends to cause a difficulty in housing the honeycomb structural body in the metal shell in the case where, in particular, a press-in system is used upon housing the honeycomb structural body in the metal shell. The lower limit of the thickness of the holding sealing material is more desirably set to 1.5 times the gap, and the upper limit of the thickness of the holding sealing material is more desirably set to 3.0 times the gap thereof.

The coefficient of static friction of the holding sealing material to the metal shell is set to 0.20. The coefficient of less than 0.20 tends to fail to firmly secure the honeycomb structural body to the metal shell.

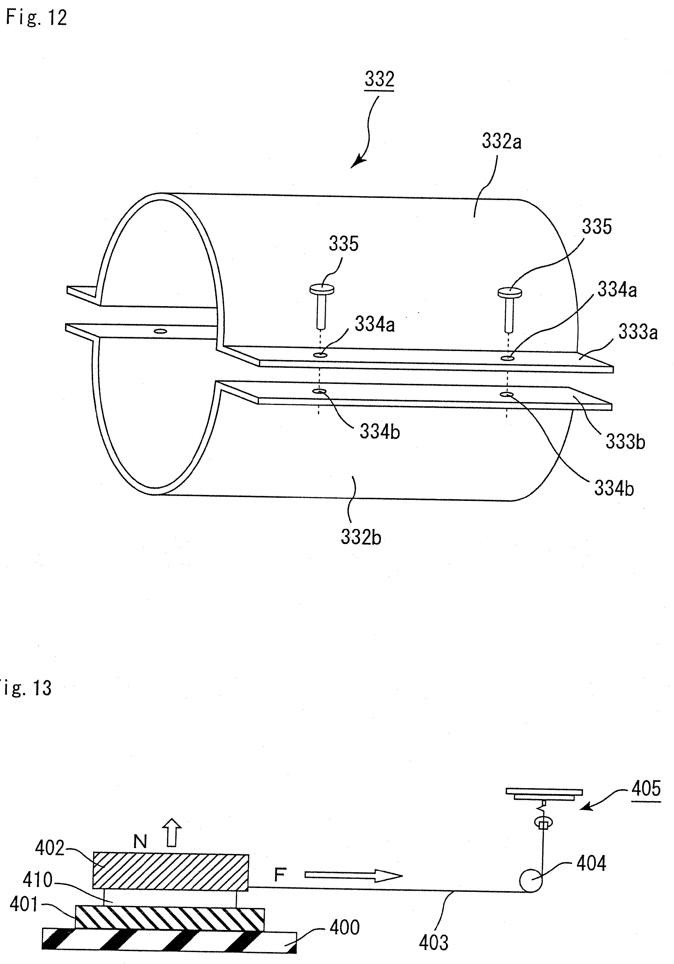

Here, the coefficient of static friction can be measured by using a measuring device as shown in Fig. 13. More specifically, an SUS plate 401, a holding sealing material 410 having a size of 30 mm x 50 mm and a weight 402 of 5 kg were placed in succession on a hot plate 400 at normal temperature, and after this state has been maintained for 10 minutes, a wire 403 to which the weight 402 is attached is pulled at a rate of 10 mm/min through a pulley block 404 by using a universal testing machine 405, and the peak load F is measured. Here, a protrusion or the like is formed in the weight 402 so as not to cause a displacement on an interface between the weight 402 and the holding sealing material 410 so that the two members are firmly secured so as to carry out the measurements. Based upon the resulting peak load F(N) and a force N(N) exerted in a perpendicular direction on the contact face between the SUS plate 401 and the holding sealing material 410, the coefficient of static friction $\mu$ is calculated from the following relational expression (4).

$$\mu = F/N \ \ldots (4)$$

With respect to the gap bulk density (GBD) in a state in which the holding sealing material is housed in the metal shell, a desirable lower limit value is set to 0.20 g/cm$^3$, and a desirable upper limit value is set to 0.60 g/cm$^3$. When the GBD is less than 0.20 g/cm$^3$, it is not possible to obtain a sufficiently high initial surface pressure to cause a failure in obtaining a firmly secured state of the honeycomb structural body onto the metal shell during use of the exhaust gas purifying device, due to a reduction in surface pressure with elapsed time. In contrast, the GBD exceeding 0.60 g/cm$^3$ tends to cause degradation in the assembling property of the holding sealing material, bent inorganic fibers inside the holding sealingmaterial and damages to the honeycomb structural body. The upper limit of the GBD is desirably set to 0.55 g/cm$^3$.

The lower limit of the initial surface pressure in the state of the holding sealing material housed inside the metal shell is desirably set to 40 kPa. The initial surface pressure of less than 40 kPa tends to cause a failure in obtaining a firmly secured state of the honeycomb structural body onto the metal shell during use of the exhaust gas purifying device, due to a reduction in surface pressure with elapsed time. The lower limit of the initial surface pressure is desirably set to 70 kPa.

In the case where, with respect to the metal shell, a press-in system is adopted as an assembling system for the honeycomb structural body, a metal cylinder member 330, having an O-shaped cross section as shown in Fig. 10, is used, and in the case where a canning system is adopted, members (that is, clam shells), obtained by dividing a metal cylinder member 332 having an O-shaped cross section as shown in Fig. 12, are used; moreover, in the case where a wind-tightening system is adopted, a metal cylindrical member having a C-shaped or U-shaped cross-section with only one slit (opening) extending along the length direction is used. Here, in the case where the canning system and the wind-tightening system are used, upon assembling the honeycomb structural body, a method is used in which a member having a honeycomb structural body on which the holding sealing material is secured, is housed in the metal shell and the opening ends thereof are joined through a welding process, a bonding process, a bolt-tightening process or the like in the tightened state of the metal shell.

With respect to the metal forming the metal shell, metal having superior heat resistance and impact-resistance, such as stainless, is desirably used.

With respect to the honeycomb structural body, not particularly limited, for example, the honeycomb structural body of the first aspect may be used.

Moreover, different from the honeycomb structural body of the first aspect, the honeycomb structural body is not necessarily designed to use inorganic fibers having the aforementioned composition that is soluble to physiological salt solution as the sealingmaterial layer, and may have approximately the same structure as the honeycomb structural body of the first aspect, with a conventionally known layer being used as the sealing material layer.

An exhaust gas purifying device 300, having the above-mentioned structure, functions at least a diesel particulate filter (DPF), and collects particulates in exhaust gases discharged from an internal combustion system such as a diesel engine or the like, and purifies the exhaust gases.

In other words, the exhaust gases are directed into a metal shell 330 through an introducing pipe, and allowed to flow into the honeycomb structural body 320 through one of the through holes 321 and pass through the wall portion 323; thus, after the particulates in the exhaust gases have been collected by the partition wall 323, the resulting exhaust gases are discharged out of the honeycomb structural body 320 from another through hole 321, and further externally discharged through an exhaust pipe.

In the exhaust gas purifying device 300, after a large quantity of particulates have been accumulated on the partition wall 323 of the honeycomb structural body 320 to cause an increase in pressure loss, the honeycomb structural body 320 is subjected to a regenerating process.

In the regenerating process, a high-temperature gas is allowed to flow into the through holes 321 of the honeycomb structural body 320 so that the honeycomb structural body 320 is heated; thus, the particulates accumulated on the partition wall 323 are burned and eliminated. Here, the high-temperature gas is generated by a heating means or the like that is placed on the exhaust gas inlet side inside the metal shell 330.

Moreover, a catalyst may be supported on the honeycomb structural body, and in the case where the catalyst is supported thereon, by using the inorganic fibers as described above, the NOx absorbing and storing effects are prepared to prevent the catalystfrombeingpoisoned; thus, itbecomespossibletoprovide superior exhaust gas converting functions.

Next, description will be given of a manufacturing method for the exhaust gas purifying device according to the third aspect of the present invention.

First, a honeycomb structural body and a holding sealing material are manufactured in a separated manner.

The honeycomb structural body can be manufactured by using the same method as the method for manufacturing the honeycomb structural body according to the first aspect.

For example, the above-mentioned holding sealing material is suitably formed through a method in which a formed body of the inorganic fibers, shaped into a holding sealing material 10, is impregnated with the organic binder.

With respect to the method for manufacturing the formed body of the inorganic fibers shaped into the holding sealing material, conventionally known methods may be used, and, for example, a method which includes a step (1-1) in which inorganic fibers are manufactured through a blowing method, a spinning method, a sol-gel method and the like, a step (1-2) in which the inorganic fibers are molded into a formed body of mat-shaped inorganic fibers, and a step (1-3) in which the formed body is punched into a desired shape by using a metal mold, is adopted.

With respect to the method in which the formed body of the inorganic fibers, formed into the holding sealing material, is impregnated with the organic binder, not particularly limited, the following methods and the like may be adopted: a method in which a latex, formed by dispersing the organic binder in water by using an emulsifier, is prepared so that the formed body is immersed in this latex; a method in which the latex is atomized into a fog state by using a spray and blown onto the formed body; and a method in which the latex is directly applied to or dripped onto the formed body. Among these, the method in which the formed body is immersed in the latex is desirably used. Thus, it becomes possible to positively impregnate the formed body with the organic binder to the inside thereof evenly.

With respect to the content of the organic binder in the latex, a lower limit value is desirably set to 0.5% by weight, and an upper limit value is desirably set to 2% by weight. When the content of the organic binder in the latex is less than 0.5% by weight, the resulting holding sealingmaterial tends to easily cause scattering of the inorganic fibers. In contrast, when the content of the organic binder in the latex exceeds 2% by weight, the content of the inorganic binder in the holding sealing material tends to become too high, resulting in a difficulty in clearing the stipulated value for exhaust gases.

With respect to the viscosity of the latex, a lower limit value is desirably set to 10 mPa·s, and an upper limit value is desirably set to 40 mPa·s.

After the formed body of the inorganic fibers have been impregnated with the organic binder, the resulting material is subj ected to heating and drying processes while being compressed in the thickness direction of the holding sealing material so that excessive moisture derived from the latex is removed and the holding sealing material is compressed in the thickness direction to be made thinner.

Moreover, the holding sealing material is desirably subjected to a needle punching process. This needle punching process is carried out so that the holding sealing material is stuck by needles (styluses) so that the inorganic fibers are entangled in the longitudinal direction; thus, the holding sealing material is allowed to have sufficient elasticity. Here, water flows or the like, simulating a needle state, may also be used as the needles.

The above-mentioned needle punching process may be carried out prior to the impregnation with the organic binder, or may be carried out after the impregnation therewith.

The holding sealing material, formed through the above-mentioned processes, is wound around the periphery of the honeycomb structural body manufactured through the above-mentioned processes in the length direction, and secured thereon.

With respect to the method for winding the holding sealing material around the honeycomb structural body to be secured thereon, not particularly limited, for example, a method for bonding the sealing material thereto with an adhesive or a tape and a method for binding the sealing material thereto with a string-shaped material may be used. Moreover, the sequence may proceed to the next step, with the sealing material being simply wound around without securing it by a special means.

Here, the string-shaped material is desirably made from a material that is decomposed by heat.

Next, the honeycomb structural body wound with the holding sealing material is housed in the metal shell and secured therein so that an exhaust gas purifying device of the present invention is completed.

With respect to the method for housing the honeycomb structural body wound with the holding sealing material in the metal shell, as described above, the press-inmethod, the canning method, the wind-tightening method and the like may be listed. In the press-in method, the honeycomb structural body is pressed therein from one end of a metal cylinder member having an O-shaped cross section as shown in Fig. 10 so that the honeycomb structural body wound with the holding sealing material is housed in the metal cylinder member and secured therein.

In the canning system, after the honeycomb structural body wound with the holding sealing material has been placed inside a semi-cylinder lower shell 332b as shown in Fig. 12, an upper shell 332a is placed so that through holes 334a of an upper-shell securing portion 333a formed on the semi-cylinder upper shell 332a are just superposed on through holes 334b of a lower-shell securing portion 333b formed on the lower-shell 332b. Then, bolts 335 are inserted through the through holes 334a and 334b and secured by nuts and the like so that the honeycomb structural body wound with the holding sealing material is housed in the metal cylinder member 332 having an O-shaped cross section and secured therein. Here, instead of the bolt-tightening process, a method, such as a welding method, a bonding method or the like, may be used.

In the wind-tightening system, after the honeycomb structural body wound with the holding sealing material has been housed inside the metal cylinder member having a C-shaped or U-shaped cross section, which has only one slit (opening section) extending in the length direction, and with the metal shells being tightened in the same manner as the above-mentioned canning system, the opening ends are joined to each other through a method, such as a welding method, a bonding method, a bolt-tightening method or the like, and secured to each other.

Thus, an exhaust gas purifying device according to the third aspect of the present invention is manufactured through the above-mentioned processes. In what follows, Examples 13 to 16 illustrate the invention, Examples 1 to 12 and 17 to 37 being reference examples.

EXAMPLES

(Example 1)

(1) Powder of $\alpha$-type silicon carbide having an average particle size of 10 $\mu$m (60% by weight) and powder of $\alpha$-type silicon carbide having an average particle size of 0.5 $\mu$m (40% by weight) were wet-mixed, and to 100 parts by weight of the resulting mixture were added and kneaded 5 parts by weight of an organic binder (methyl cellulose) and 10 parts by weight of water to obtain amixedcomposition. Next, after a slight amount of a plasticizer and a lubricant had been added to the kneaded matter and further kneaded, the resulting matter was extrusion-molded so that a raw formed body was manufactured.

Next, after the above-mentioned raw formed body had been dried by using a microwave drier or the like, predetermined through holes were filled with a sealing material (plug) paste having the same composition as the raw formed body, and after this had been again dried by using a drier, the resulting product was degreased at 400°C, and sintered at 2200°C in a normal-pressure argon atmosphere for 3 hours to manufacture a porous ceramic member having a shape shown in Fig. 3, which was a silicon carbide sintered body and had a size of 34 mm $\times$ 34 mm $\times$ 300 mm, the number of through holes of 31 pcs/cm$^2$ and a thickness of the partition wall of 0.3 mm.

(2) By using a heat resistant sealing material paste (adhesive paste) containing 31% by weight of inorganic fibers having an average fiber diameter of 3 $\mu$m and an average fiber length of 30 $\mu$m, composed of 85% by weight of silica and 15% by weight of magnesium oxide (see Table 1), 22% by weight of silicon carbide particles having an average particle size of 0.6 $\mu$m, 16% by weight of silica sol, 1% by weight of carboxymethyl cellulose and 30% by weight of water, a large number of the porous silicon ceramic members were combined with one another by using the above-mentioned method to prepare a ceramic laminated body.

Here, with respect to the inorganic fibers, after blending the above-mentioned materials, the resulting mixture was heated and melted to prepare the fibers by using a blowing method.

Moreover, the solubility to physiological salt solution of the inorganic fibers was measured through the following method.

(I) First, 2.5 g of inorganic fibers were suspended in distilled water by using a blender for the food, and this was then allowed to stand still to precipitate the inorganic fibers, and after the supernatant liquid had been removed through decantation, the resulting solution was dried at 110°C to remove the remaining liquid so that an inorganic fiber sample was prepared.

(II)Sodium chloride (6.780 g), ammonium chloride (0.540 g), sodium hydrogencarbonate (2.270 g), disodium hydrogenphosphate (0.170 g), sodium citrate dehydrate (0.060 g), glycine (0.450 g) and sulfuric acid (0.050 g, specific gravity: 1.84) were diluted in distilled water (1 liter) to prepare a physiological salt solution.

(III) The inorganic fiber sample (0.50 g) prepared in (I) and the physiological salt solution (25 cm$^3$) prepared in (II) were put into a centrifugal tube, and after having been fully shaken, this was subjected to a treatment by a shaking incubator at 20 cycles/min at 37°C for 5 hours. Then, the centrifugal tube was taken out, and subjected to a centrifugal separation process at 4500 rpm for 5 minutes; thus, the supernatant liquid thereof was taken out by using an injector.

(IV) Next, the supernatant liquid was filtered through a filter (0.45 $\mu$m, cellulose nitrate membrane filter), and the resulting sample was subjected to an atomic absorption analysis so that the solubility to physiological salt aqueous solution of eachof silica, calciumoxide and magnesium oxide was measured. The results are shown in Table 1.

Here, Table 1 shows the solubility of inorganic fibers as a whole.
(3) Successively, the ceramic laminated body was cut by using a diamond cutter in parallel with the length direction thereof to form a cylindrical ceramic block as shown in Fig. 2.

(4) Next, by using a sealing material paste having the same composition as the paste used as the adhesive (sealing material) paste, a sealing material paste layer was formed on the peripheral portion of the ceramic block. Then, the sealing material paste layer was dried at 120°C so that a cylindrical honeycomb structural body having a thickness of 1.0 mm in the sealingmaterial layer formed between the porous ceramic members as well as on the peripheral portion of the ceramic block, with a diameter of 143.8 mm, such as a honeycomb structural body 20 shown in Fig. 2, was manufactured.

This honeycomb structural body was secured in a cylindrical metal shell, made of stainless, having an inner diameter of 152 mm × a length of 300 mm, through a holding sealing material made of an inorganic fiber mat material (average fiber diameter: 3 $\mu$m, average fiber length: 30 mm, thickness: 8 mm, bulk density: 0.15) made of alumina fibers composed of 70% by weight of an alumina component and 30% by weight of a silica component.
Here, in the columns of members of Table 1, adhesives and sealing materials that are indicated with white circle represent the use of inorganic fibers having compositions shown in Table 1 as a sealing material (adhesive) to be used for bonding porous ceramic members and as a sealing material to be formed on the peripheral portion of the ceramic block.
The same is true in the following examples and comparative examples, and holding sealing materials that are indicated with white circle represent the use of inorganic fibers having compositions shown in Table 1 as the inorganic fibers forming the holding sealing material, and when only the adhesives are indicated with white circle, these cases represent that inorganic fibers having compositions shown in Table 1 are used as only the adhesives, and when only the sealing materials are indicated with white circle, these cases represent that inorganic fibers having compositions shown in Table 1 are used as only the sealing materials.

Moreover, when members are not indicated with white circle with the column of the base member of the honeycomb structural body indicating inorganic fibers, this case represents that inorganic fibers having compositions shown in Table 1 are used as the base member forming the honeycomb structural body.

(Example 2)

The same processes as those of Example 1 were carried out except that inorganic fibers having an average fiber diameter of 3 $\mu$m and an average fiber length of 30 $\mu$m, composed of 80% by weight of silica and 20% by weight of magnesium oxide, as shown in Table 1, were used to manufacture a honeycomb structural body.

The solubility of the inorganic fibers was measured in the same manner as Example 1.

(Example 3)

The same processes as those of Example 1 were carried out except that inorganic fibers having an average fiber diameter of 3 $\mu$m and an average fiber length of 30 $\mu$m, composed of 70% by weight of silica and 30% by weight of magnesium oxide, as shown in Table 1, were used to manufacture a honeycomb structural body.

The solubility of the inorganic fibers was measured in the same manner as Example 1.

(Example 4)

The same processes as those of Example 1 were carried out except that inorganic fibers having an average fiber diameter of 3 $\mu$m and an average fiber length of 30 $\mu$m, composed of 60% by weight of silica and 40% by weight of magnesium oxide, as shown in Table 1, were used to manufacture a honeycomb structural body.

The solubility of the inorganic fibers was measured in the same manner as Example 1.

(Example 5)

(1) First, the same processes as those of Example 1 were carried out to manufacture a porous ceramic member.
(2) By using a heat resistant sealing material paste containing 30% by weight of alumina fibers having a fiber length of 0.2 $\mu$m, 21% by weight of silicon carbide having an average particle size of 0.6 $\mu$m, 15% by weight of silica sol, 5.6% by weight of carboxymethyl cellulose and 28.4% by weight of water, a large number of the porous silicon ceramic members were combined with one another in the same manner as Example 1 to prepare a ceramic laminated body.

(3) Successively, the ceramic laminated body was cut by using a diamond cutter in parallel with the length direction thereof to form a cylindrical ceramic block as shown in Fig. 2.

(4) Next, by using a heat resistant sealing material paste containing 31% by weight of inorganic fibers having an average fiber diameter of 3 $\mu$m and an average fiber length of 30 $\mu$m, composed of 85% by weight of silica and 15% by weight of magnesium oxide, 22% by weight of silicon carbide particles having an average particle size of 0.6 $\mu$m, 16% by weight of silica sol, 1% by weight of carboxymethyl cellulose and 30% by weight of water as shown in Table 1, a sealing material paste layer was formed on the peripheral portion of the ceramic block. Here, with respect to the inorganic fibers, after blending the above-mentioned materials, the resulting mixture was heated and melted to prepare the fibers by using a blowing method. Moreover, the solubility of the inorganic fibers was measured in the same manner as Example 1.

Then, the sealing material paste layer was dried so that a cylindrical honeycomb structural body, such as a honeycomb structural body 20 shown in Fig. 2, having a thickness of 1.0 mm in the sealingmaterial layer formedbetween the porous ceramic members as well as on the peripheral portion of the ceramic block, with a diameter of 143.8 mm, was manufactured.

This honeycomb structural body was secured in a cylindrical metal shell, made of stainless, having an inner diameter of 152 mm x a length of 300 mm, through a holding sealing material made of an inorganic fiber mat material (average fiber diameter: 3 $\mu$m, average fiber length: 30 mm, thickness: 8 mm, bulk density: 0.15) made of alumina fibers composed of 70% by weight of an alumina component and 30% by weight of a silica component.

(Example 6)

The same processes as those of Example 5 were carried out except that inorganic fibers having an average fiber size of 3 $\mu$m and an average fiber length of 30 $\mu$m, composed of 80% by weight of silica and 20% by weight of magnesium oxide, as shown in Table 1, were used as a sealing material in step (4) of Example 5 to manufacture a honeycomb structural body.
The solubility of the inorganic fibers was measured in the same manner as Example 1.

(Example 7)

The same processes as those of Example 5 were carried out except that inorganic fibers having an average fiber diameter of 3 $\mu$m and an average fiber length of 30 $\mu$m, composed of 70% by weight of silica and 30% by weight of magnesium oxide, as shown in Table 1, were used as a sealing material in step (4) of Example 5 to manufacture a honeycomb structural body.
The solubility of the inorganic fibers was measured in the same manner as Example 1.

(Example 8)

The same processes as those of Example 5 were carried out except that inorganic fibers having an average fiber diameter of 3 $\mu$m and an average fiber length of 30 $\mu$m, composed of 60% by weight of silica and 40% by weight of magnesium oxide, as shown in Table 1, were used as a sealing material in step (4) of Example 5 to manufacture a honeycomb structural body.
The solubility of the inorganic fibers was measured in the same manner as Example 1.

(Example 9)

(1) First, porous ceramic members were manufactured in the same manner as Example 1.
(2) By using a heat resistant adhesive (sealing material) paste containing 31% by weight of inorganic fibers having an average fiber diameter of 3 $\mu$m and an average fiber length of 30 $\mu$m, composed of 85% by weight of silica and 15% by weight of magnesium oxide, 22% by weight of silicon carbide particles having an average particle size of 0.6 $\mu$m, 16% by weight of silica sol, 1% by weight of carboxymethyl cellulose and 30% by weight of water as shown in Table 1, a number of the porous ceramic members were combined with one another by using the aforementioned method to form a ceramic laminated body.

Here, with respect to the inorganic fibers, after blending the above-mentioned materials, the resulting mixture was heated and melted to prepare the fibers by using a blowing method.
Moreover, the solubility of the inorganic fibers was measured in the same manner as Example 1.
(3) Successively, the ceramic laminated body was cut by using a diamond cutter in parallel with the length direction thereof to form a cylindrical ceramic block as shown in Fig. 2.

(4) Next, ceramic fibers made from alumina silicate (shot content: 3%, fiber length: 0.1 to 100 mm) (23.3% by weight), which served as inorganic fibers, silicon carbide powder having an average particle size of 0.3 $\mu$m (30.2% by weight), which served as inorganic particles, silica sol ($SiO_2$ content in the sol: 30% by weight) (7% by weight), which served as an inorganic binder, carboxymethyl cellulose (0.5% by weight), which served as an organic binder, and water (39% by weight) were mixed and kneaded to prepare a sealing material paste, and a sealing material paste layer was formed on the peripheral portion of the ceramic block by using the above-mentioned sealing material paste.

Then, the sealing material paste layer was dried so that a cylindrical honeycomb structural body having a thickness of 1.0 mm in the sealing material layer formed between the porous ceramicmembers as well as on the peripheral portion of the ceramic block, with a diameter of 143.8 mm, such as a honeycomb structural body 20 shown in Fig. 2, was manufactured.

This honeycomb structural body was secured in a cylindrical metal shell, made of stainless, having an inner diameter of 152 mm × a length of 300 mm, through a holding sealing material made of an inorganic fiber mat material (average fiber diameter: 3 μm, average fiber length: 30 mm, thickness: 8 mm, bulk density: 0.15) made of alumina fibers composed of 70% by weight of an alumina component and 30% by weight of a silica component.

(Example 10)

The same processes as those of Example 9 were carried out except that inorganic fibers having an average fiber size of 3 μm and an average fiber length of 30 μm, composed of 80% by weight of silica and 20% by weight of magnesium oxide, as shown in Table 1, were used as an adhesive paste in step (2) of Example 9 to manufacture a honeycomb structural body.

The solubility of the inorganic fibers was measured in the same manner as Example 1.

(Example 11)

The same processes as those of Example 9 were carried out except that inorganic fibers having an average fiber diameter of 3 μm and an average fiber length of 30 μm, composed of 70% by weight of silica and 30% by weight of magnesium oxide, as shown in Table 1, were used as an adhesive paste in step (2) of Example 9 to manufacture a honeycomb structural body.

The solubility of the inorganic fibers was measured in the same manner as Example 1.

(Example 12)

The same processes as those of Example 9 were carried out except that inorganic fibers having an average fiber diameter of 3 μm and an average fiber length of 30 μm, composed of 60% by weight of silica and 40% by weight of magnesium oxide, as shown in Table 1, were used as an adhesive paste in step (2) of Example 9 to manufacture a honeycomb structural body.

The solubility of the inorganic fibers was measured in the same manner as Example 1.

(Example 13)

(1) Materials including 40 parts by weight of talc having an average particle size of 10 μm, 10 parts by weight of kaolin having an average particle size of 9 μm, 17 parts by weight of alumina having an average particle size of 9.5 μm, 16 parts by weight of aluminum hydroxide having an average particle size of 5 μm, 15 parts by weight of silica having an average particle size of 10 μm, 30 parts by weight of graphite having an average particle size of 10 μm, 17 parts by weight of a molding assistant (ethylene glycol) and 25 parts by weight of water were mixed and kneaded to prepare a material paste.

(2) Next, the above-mentioned material paste was loaded into an extrusion-molding machine and extrusion-molded to form a pillar-shaped ceramic formed body having the approximately same shape as a honeycomb structural body 320 shown in Fig. 9 at an extruding rate of 10 cm/min, and the ceramic formed body was dried by using a microwave dryer to form a ceramic structural body.

(3) Next, talc having an average particle size of 10 μm (40 parts by weight), kaolin having an average particle size of 9 μm (10 parts by weight), alumina having an average particle size of 9.5 μm (17 parts by weight), aluminum hydroxide having an average particle size of 5 μm (16 parts by weight), silica having an average particle size of 10 μm (15 parts by weight), a lubricant made from polyoxyethylene monobutyl ether (trade name: UNILOOP, made by NOF Corp.) (4 parts by weight), a solvent made from diethylene glycol mono-2-ethylhexyl ether (trade name: OX-20, made by Kyowa Hakko Kogyo Co., Ltd.) (11 parts by weight), a dispersant made from a phosphoric ester-based compound (trade name : PLYSURF, made by Dai-Ichi Kogyo Seiyaku Co., Ltd.) (2 parts by weight) and a binder prepared by dissolving n-butyl methacrylate in OX-20 (trade name: BINDER D, made by Toei Kasei Co., Ltd.) (5 parts by weight) were blended and uniformly mixed so that a filler (plug) paste was prepared. After the filler (plug) paste had been injected into predetermined through holes of the ceramic structural body, the resulting structural body was again dried by using a microwave dryer, and then degreased at 400°C, and fired at 1400°C in a normal-pressure argon atmosphere for 3 hours to manufacture a cylindrical honeycomb structural body that was made from cordierite, and had a size of 143.8 mm in diameter $\times$ 300 mm in width, the number of through holes of 31 pcs/cm$^2$ and a thickness of the through holes of 0.3 mm, as shown in Fig. 9.

(4) A mat-shaped inorganic fiber aggregated body (thickness: 8.5 mm, fiber diameter: 3 $\mu$m, average fiber length: 30 mm), made from 85% by weight of silica and 15% by weight of magnesium oxide as shown in Table 1, was immersed in a latex (made by Zeon Corp.) containing 1% by weight of styrene-butadiene-based resin, and the resulting inorganic fiber aggregated body was then taken out, and dried at 120°C for one hour while being compressed under 13 MPa; thus, a holding sealing material having a thickness of 8 mm, which contained 1% by weight of styrene-butadiene-based binder, was manufactured.

The solubility of the inorganic fibers was measured in the same manner as Example 1.
(5) The honeycomb structural body manufactured in the aforementioned step (3) was secured in a cylindrical metal shell, made of stainless, having an inner diameter of 151.8 mm $\times$ a length of 300 mm, through a holding sealing material manufactured in the aforementioned step (4).

(Example 14)

The same processes as those of Example 13 were carried out except that the holding sealing material was manufactured by using a mat-shaped inorganic fiber aggregated body (thickness: 8.5 mm, fiber diameter: 3 $\mu$m, fiber length: 30 mm) composed of 80% by weight of silica and 20% by weight of magnesium oxide, as shown in Table 1, in the step (4) of Example 13; thus, a honeycomb structural body was manufactured.
The solubility of the inorganic fibers was measured in the same manner as Example 1.

(Example 15)

The same processes as those of Example 13 were carried out except that the holding sealing material was manufactured by using a mat-shaped inorganic fiber aggregated body (thickness : 8.5 mm, fiber diameter: 3 $\mu$m, fiber length: 30 mm) composed of 70% by weight of silica and 30% by weight of magnesium oxide, as shown in Table 1, in the step (4) of Example 13; thus, a honeycomb structural body was manufactured.
The solubility of the inorganic fibers was measured in the same manner as Example 1.

(Example 16)

The same processes as those of Example 13 were carried out except that the holding sealing material was manufactured by using amat-shaped inorganic fiber aggregatedbody (thickness : 8.5 mm, fiber diameter: 3 $\mu$m, fiber length: 30 mm) composed of 60% by weight of silica and 40% by weight of magnesium oxide, as shown in Table 1, in the step (4) of Example 13; thus, a honeycomb structural body was manufactured.
The solubility of the inorganic fibers was measured in the same manner as Example 1.

(Example 17)

(1) Organic fibers having an average fiber diameter of 5 $\mu$m and an average fiber length of 300 $\mu$m, composed of 85% by weight of silica and 15% by weight of magnesium oxide, were dispersed in water (1 L) at a rate of 10 g therein, and in addition to these, 5% by weight of silica sol serving as an inorganic binder and 3% by weight of an acrylic latex serving as an organic binder were added thereto. Further, a slight amount of aluminum sulfate serving as a coagulant and polyacrylic amide serving as an aggregation agent were further added thereto, and the mixture was sufficiently stirred to prepare a slurry for paper-making.

The solubility of the inorganic fibers was measured in the same manner as Example 1.

(2) The slurry, obtained in the step (1), was subjected to a paper-making process by using a perforated mesh having a diameter of 143.8 mm in which holes having a size of 4.5 mm $\times$ 4.5 mm were formed with mutual intervals of 2 mm over approximately the entire face thereof, and the resulting matter was dried at a temperature of 150°C so that sheets A frompaper-makingprocess, which had holes having a size of 4.5 mm $\times$ 4.5 mm formed over the entire surface with intervals of 2 mm, and a thickness of 1 mm, were obtained.

Moreover, in order to obtain two-ends-use sheets, the same fiber-processing and drying processes were carried out by using a mesh in which holes having a size of 4.5 mm $\times$ 4.5 mm were formed in a checked pattern so that sheets B from paper-making process in which holes having a size of 4.5 mm $\times$ 4.5 mm were formed in a checked pattern were obtained.
(3) A casing (cylindrical metal container) having a pressing member on one side was placed with the side to which the pressing member was attached facing down. After three of the sheets B obtained from paper-making process had been laminated, 300 of the sheets A obtained frompaper-makingprocess were laminated, and three of the sheets obtained from paper-making process were lastly laminated therein, and this was further subjected to a pressing process, and another pressing member is also put on the other side and secured thereon so that a honeycomb structural body having a length of 300 mm, made of a laminated body, was prepared. In this process, the respective sheets were laminated so that the through holes were superposed on one another.

(Example 18)

The same processes as those of Example 17 were carried out except that the slurry for paper-making was prepared by using inorganic fibers having an average fiber diameter of 5 $\mu$m and an average fiber length of 300 $\mu$m, composed of 80% by weight of silica and 20% by weight of magnesium oxide, as shown in Table 1, in the step (1) of Example 17; thus, a honeycomb structural body was manufactured.
The solubility of the inorganic fibers was measured in the same manner as Example 1.

(Example 19)

The same processes as those of Example 17 were carried out except that the slurry for paper-making was prepared by using inorganic fibers having an average fiber diameter of 5 $\mu$m and an average fiber length of 300 $\mu$m, composed of 70% by weight of silica and 30% by weight of magnesium oxide, as shown in Table 1, in the step (1) of Example 17; thus, a honeycomb structural body was manufactured.
The solubility of the inorganic fibers was measured in the same manner as Example 1.

(Example 20)

The same processes as those of Example 17 were carried out except that the slurry for paper-making was prepared by using inorganic fibers having an average fiber diameter of 5 $\mu$m and an average fiber length of 300 $\mu$m, composed of 60% by weight of silica and 40% by weight of magnesium oxide, as shown in Table 1, in the step (1) of Example 17; thus, a honeycomb structural body was manufactured.
The solubility of the inorganic fibers was measured in the same manner as Example 1.

(Examples 21 to 37)

The same processes as those of Example 1 were carried out except that inorganic fibers having an average fiber diameter of 3 $\mu$m and an average fiber length of 30 $\mu$m, the composition of which is shown in Table 1 and Table 2 were used to manufacture a honeycomb structural body.
The solubility of the inorganic fibers was measured in the same manner as Example 1.

(Comparative Example 1)

The same processes as those of Example 1 were carried out except that inorganic fibers having an average fiber diameter of 3 $\mu$m and an average fiber length of 30 $\mu$m, composed of 50% by weight of silica and 50% by weight of magnesium oxide, as shown in Table 2, were used as the inorganic fibers forming the adhesive paste and the sealing material paste; thus, a honeycomb structural body was manufactured.
The solubility of the inorganic fibers was measured in the same manner as Example 1.

(Comparative Example 2)

The same processes as those of Example 1 were carried out except that alumina silicate fibers (IBIWOOL, made by Ibiden Co., Ltd.) having an average fiber diameter of 3 $\mu$m and an average fiber length of 30 $\mu$m, composed of 50% by weight of silica and 50% by weight of alumina, as shown in Table 2, were used as the inorganic fibers forming the adhesive paste and the sealing material paste; thus, a honeycomb structural body was manufactured.
The solubility of the alumina silicate fibers was measured in the same manner as Example 1.

(Comparative Example 3)

The same processes as those of Example 1 were carried out except that inorganic fibers having an average fiber diameter of 3 $\mu$m and an average fiber length of 30 $\mu$m, composed of 50% by weight of silica, 25% by weight of calcium oxide and 25% by weight of magnesium oxide, as shown in Table 2, were used as the inorganic fibers forming the adhesive paste and the sealing material paste; thus, a honeycomb structural body was manufactured.
The solubility of the inorganic fibers was measured in the same manner as Example 1.

(Comparative Example 4)

In the step (4) of Example 5, the same processes as those of Example 5 were carried out except that alumina silicate fibers (IBIWOOL, made by Ibiden Co., Ltd.) having an average fiber diameter of 3 $\mu$m and an average fiber length of 30 $\mu$m, composed of 50% by weight of silica and 50% by weight of alumina, as shown in Table 2, were used as the inorganic fibers forming the sealing material paste; thus, a honeycomb structural body was manufactured.
The solubility of the alumina silicate fibers was measured in the same manner as Example 1.

(Comparative Example 5)

In the step (2) of Example 9, the same processes as Example 9 were carried out except that inorganic fibers having an average fiber diameter of 3 $\mu$m and an average fiber length of 30 $\mu$m, composed of 50% by weight of silica, 25% by weight of calcium oxide and 25% by weight of magnesium oxide, as shown in Table 2, were used as the inorganic fibers forming the adhesive paste; thus, a honeycomb structural body was manufactured.
The solubility of the inorganic fibers was measured in the same manner as Example 1.

(Comparative Example 6)

In the step (2) of Example 9, the same processes as those of Example 9 were carried out except that alumina silicate fibers (IBIWOOL, made by Ibiden Co., Ltd.) having an average fiber diameter of 3 $\mu$m and an average fiber length of 30 $\mu$m, composed of 50% by weight of silica and 50% by weight of alumina, as shown in Table 2, were used as the inorganic fibers forming the adhesive paste; thus, a honeycomb structural body was manufactured.
The solubility of the alumina silicate fibers was measured in the same manner as Example 1.

(Comparative Example 7)

In the step (4) of Example 13, the same processes as those of Example 13 were carried out except that the holding sealing material was manufactured by using a mat-shaped inorganic fiber aggregated body (thickness: 8.5 mm, fiber diameter: 3 $\mu$m, fiber length: 30 mm) composed of 50% by weight of silica, 25% by weight of calcium oxide and 25% by weight of magnesium oxide, as shown in Table 2; thus, a honeycomb structural body was manufactured.
The solubility of the inorganic fibers was measured in the same manner as Example 1.

(Comparative Example 8)

In the step (4) of Example 13, the same processes as those of Example 13 were carried out except that the holding sealing material was manufactured by using a mat-shaped inorganic fiber aggregated body (thickness: 8.5 mm, fiber diameter: 3 $\mu$m, fiber length: 30 mm) composed of 50% by weight of silica and 50% by weight of alumina, as shown in Table 2; thus, a honeycomb structural body was manufactured.

The solubility of the inorganic fibers was measured in the same manner as Example 1.

(Comparative Example 9)

The same processes as those of Example 17 were carried out except that the slurry for paper-making was prepared by using inorganic fibers having an average fiber diameter of 5 $\mu$m and an average fiber length of 300 $\mu$m, composed of 50% by weight of silica, 25% by weight of calcium oxide and 25% by weight of magnesium oxide, as shown in Table 2, in the step (1) of Example 17; thus, a honeycomb structural body was manufactured.

The solubility of the inorganic fibers was measured in the same manner as Example 1.

(Comparative Example 10)

The same processes as those of Example 17 were carried out except that the slurry for paper-making was prepared by using inorganic fibers having an average fiber diameter of 5 $\mu$m and an average fiber length of 200 $\mu$m, composed of 50% by weight of silica and 50% by weight of alumina, as shown in Table 2, in the step (1) of Example 17; thus, a honeycomb structural body was manufactured.

The solubility of the alumina silicate fibers was measured in the same manner as Example 1.

(Evaluation on converting property of NOx)

Each of the honeycomb structural bodies according to Examples 1 to 37 and Comparative Examples 1 to 10 was placed in an exhaust passage in an engine to prepare an exhaust gas purifying device, and the honeycomb structural body was maintained at 400°C while $N_2$ gas was allowed to flow through the honeycomb structural body.

Next, a simulation gas having approximately the same composition as exhaust gases from a diesel engine except that no particulates were contained was allowed to flow through the honeycomb structural body at 130 L/min, and after a lapse of one minute, gases were sampled from the inlet side as well as from the outlet side of the honeycomb structural body; thus, by measuring the amounts of NOx contained in these gases, the converting property of NOx was evaluated. The results of evaluation are shown in in Tables 1 and 2.

Here, the converting property of NOx was evaluated based upon a rate of NOx gas concentration according to the gas on the outlet side to a rate of NOx gas concentration according to the gas on the inlet side of the honeycomb structural body.

Moreover, the simulation gas, which contains 1800 ppm of HC (hydrocarbon: organic compound composed of only carbon and hydrogen), 300 ppm of CO, 250 ppm of NOx, 9 ppm of SOx, 10% of $H_2O$ and 10% of $O_2$, was used.

The results of the tests are shown in Tables 1 and 2.

(Evaluation on absorbing property of SOx)

Each of the honeycomb structural bodies according to Examples 1 to 37 and Comparative Examples 1 to 10 was placed in an exhaust passage in an engine to prepare an exhaust gas purifying device, and the honeycomb structural body was maintained at 200°C while $N_2$ gas was allowed to flow through the honeycomb structural body.

Next, a simulation gas having approximately the same composition as the simulation gas used for the evaluation of the converting property of NOx was allowed to flow through the honeycomb structural body at 130 L/minute, and after a lapse of 10 minutes, gases were sampled from the inlet side as well as from the outlet side of the honeycomb structural body; thus, by measuring the amounts of SOx contained in these gases, the converting property of SOx was evaluated. The results of evaluation are shown in Tables 1 and 2.

Here, the converting property of SOx was evaluated based upon a rate of SOx gas concentration according to the gas on the outlet side to a rate of SOx gas concentration according to the gas on the inlet side of the honeycomb structural body.

(Durability to cycle driving)

Each of honeycomb structural bodies according to Examples 1 to 37 and Comparative Examples 1 to 10 was placed in an exhaust passage of an engine, and a catalyst supporting body (diameter: 144 mm, length: 100 mm, cell (through hole) density: 400 cells/inch$^2$, platinum supported amount: 5 g/L) of a honeycomb structural body made from commercial cordierite was placed on the gas flow-in side from the honeycomb structural body to form an exhaust gas purifying device, and the engine was driven at the number of revolutions of 3000 min$^{-1}$ with a torque of 50 Nm so that particulates were collected for 7 hours. The amount of particulates thus collected was 8 g/L.

Thereafter, the engine was driven at the number of revolutions of 1250 min$^{-1}$ with a torque of 60 Nm, and after the filter temperature had been made constant, this state was maintained for one minute, and a post-injection process was carried out so that the oxidizing catalyst, placed on the front side, was utilized to increase the exhaust temperature to burn particulates.

The condition of the post-injection was set such that the center temperature of the honeycomb structural body became almost constant at the temperature of 600 °C in one minute after the beginning of the process. Then the above-mentioned process was repeated for 10 times. After that, the existence of the displacement between the honeycomb structural body and the metal shell was visually observed. Incidentally, regarding the honeycomb structural body according to Examples 17 to 20 and comparative examples 9,10, the existence of the displacement between the honeycomb structural body and the casing was visually observed. The results are shown in Table 1 and 2.

Table 1-1

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Absorbing property of Sox (%) | | | 27 | 28 | 30 | 33 | 24 | 25 | 26 | 28 | 23 | 24 | 26 | 28 | 29 |
| Converting property of Nox(%) | | | 30 | 32 | 35 | 39 | 28 | 30 | 34 | 35 | 29 | 31 | 33 | 37 | 33 |
| Durability to cycle driving | | | No displacement of filter | No displacement of filter | No displacement of filter | No displacement of filter | No displacement of filter | No displacement of filter | No displacement of filter | No displacement of filter | No displacement of filter | No displacement of filter | No displacement of filter | No displacement of filter | No displacement of filter |
| Solubility (ppm) | | | 300 | 400 | 420 | 430 | 300 | 400 | 420 | 430 | 300 | 400 | 420 | 430 | 300 |
| Inorganic fiber Composition | Typical metal of Group III | $B_2O_3$ (wt%) | | | | | | | | | | | | | |
| | | $Al_2O_3$ (wt%) | | | | | | | | | | | | | |
| | Alkali-earth metal | $CaO$ (wt%) | | | | | | | | | | | | | |
| | | $MgO$ (wt%) | 15 | 20 | 30 | 40 | 15 | 20 | 30 | 40 | 15 | 20 | 30 | 40 | 15 |
| | Alkali metal | $Na_2O$ (wt%) | | | | | | | | | | | | | |
| | | $K_2O$ (wt%) | | | | | | | | | | | | | |
| | $SiO_2$ (wt%) | | 85 | 80 | 70 | 60 | 85 | 80 | 70 | 60 | 85 | 80 | 70 | 60 | 85 |
| Member | Holding sealing material | | | | | | | | | | | | | | ○ |
| | Sealing material | | ○ | ○ | ○ | ○ | ○ | ○ | ○ | ○ | | | | | |
| | Adhesive | | ○ | ○ | ○ | ○ | | | | | ○ | ○ | ○ | ○ | |
| Base material of honeycomb structural body | | | Sic | Sic | Sic | Sic | Sic | Sic | Sic | Sic | Sic | Sic | Sic | Sic | Cordierite |

Table 1-2

| | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|
| Absorbing property of Sox(%) | | | 31 | 33 | 36 | 43 | 45 | 47 | 48 | 27 | 29 | 31 | 33 | 30 |
| Converting property of Nox(%) | | | 35 | 38 | 40 | 51 | 54 | 56 | 59 | 31 | 32 | 36 | 40 | 35 |
| Durability to cycle driving | | | No displacement of filter | No displacement of filter | No displacement of filter | No displacement of filter | No displacement of filter | No displacement of filter | No displacement of filter | No displacement of filter | No displacement of filter | No displacement of filter | No displacement of filter | No displacement of filter |
| Solubility(ppm) | | | 400 | 420 | 430 | 300 | 400 | 420 | 430 | 300 | 400 | 420 | 430 | 410 |
| Inorganic fiber — Composition | Typical metal of Group III | $B_2O_3$ (wt%) | | | | | | | | | | | | |
| | | $Al_2O_3$ (wt) | | | | | | | | | | | | |
| | Alkali-earth metal | CaO (wt%) | | | | | | | | 15 | 20 | 30 | 40 | 25 |
| | | MgO (wt%) | 20 | 30 | 40 | 15 | 20 | 30 | 40 | | | | | 5 |
| | Alkali metal | $Na_2O$ (wt) | | | | | | | | | | | | |
| | | $K_2O$ (wt%) | | | | | | | | | | | | |
| | | $SiO_2$ (wt%) | 80 | 70 | 60 | 85 | 80 | 70 | 60 | 85 | 80 | 70 | 60 | 70 |
| Member | Holding sealing material | | O | O | O | | | | | | | | | |
| | Sealing material | | | | | | | | | O | O | O | O | O |
| | Adhesive | | | | | | | | | O | O | O | O | O |
| Base material of honeycomb structural body | | | Cordierite | Cordierite | Cordierite | Inorganic fiber | Inorganic fiber | Inorganic fiber | Inorganic fiber | Sic | Sic | Sic | Sic | Sic |

[0216] Table 2-1

| | Example 26 | Example 27 | Example 28 | Example 29 | Example 30 | Example 31 | Example 32 | Example 33 | Example 34 | Example 35 | Example 36 | Example 37 |
|---|---|---|---|---|---|---|---|---|---|---|---|---|
| Absorbing property of Sox(%) | 32 | 32 | 36 | 28 | 30 | 19 | 21 | 28 | 30 | 32 | 35 | 32 |
| Converting property of Nox(%) | 36 | 35 | 38 | 37 | 40 | 22 | 25 | 31 | 33 | 38 | 42 | 40 |
| Durability to cycle driving | No displacement of filter | No displacement of filter | No displacement of filter | No displacement of filter | No displacement of filter | No displacement of filter | No displacement of filter | No displacement of filter | No displacement of filter | No displacement of filter | No displacement of filter | No displacement of filter |
| Solubility (ppm) | 410 | 300 | 400 | 300 | 400 | 200 | 250 | 350 | 430 | 420 | 430 | 430 |
| Inorganic fiber — Composition — Typical metal of Group III — $B_2O_3$ (wt%) | | | | | | 15 | 20 | 15 | 20 | | | 5 |
| Typical metal of Group III — $Al_2O_3$ (wt) | | | | | | | | | | | | |
| Alkali-earth metal — CaO (wt%) | 25 | | | | | | | 15 | 20 | 25 | 25 | 25 |
| Alkali-earth metal — MgO (wt%) | 15 | | | | | | | | | | | |
| Alkali metal — $Na_2O$ (wt) | | | | 15 | 20 | | | | | | | |
| Alkali metal — $K_2O$ (wt) | | 15 | 20 | | | | | | | 5 | 15 | 10 |
| $SiO_2$ (wt%) | 60 | 85 | 80 | 85 | 80 | 85 | 80 | 70 | 60 | 70 | 60 | 60 |
| Member — Holding sealing material | | | | | | | | | | | | |
| Member — Sealing material | ○ | ○ | ○ | ○ | ○ | ○ | ○ | ○ | ○ | ○ | ○ | ○ |
| Member — Adhesive | ○ | ○ | ○ | ○ | ○ | ○ | ○ | ○ | ○ | ○ | ○ | ○ |
| Base material of honeycomb structural body | SiC | SiC | SiC | SiC | SiC | SiC | SiC | SiC | SiC | SiC | SiC | SiC |

Table 2-2

| | Compar. Example 1 | Compar. Example 2 | Compar. Example 3 | Compar. Example 4 | Compar. Example 5 | Compar. Example 6 | Compar. Example 7 | Compar. Example 8 | Compar. Example 9 | Compar. Example 10 |
|---|---|---|---|---|---|---|---|---|---|---|
| Absorbing property of Sox (%) | 35 | 10 | 35 | 8 | 31 | 7 | 38 | 7 | 51 | 12 |
| Converting property of Nox (%) | 41 | 2 | 40 | 1 | 39 | 2 | 42 | 1 | 61 | 7 |
| Durability to cycle driving | Displacement of filter | No displacement of filter | Displacement of filter | No displacement of filter | Displacement of filter | No displacement of filter | Displacement of filter | No displacement of filter | Displacement of filter | No displacement of filter |
| Solubility (ppm) | 440 | 0 | 600 | 0 | 600 | 0 | 600 | 0 | 600 | 0 |
| Inorganic fiber Composition — Typical metal of Group III — $B_2O_3$ (wt%) | | | | | | | | | | |
| Inorganic fiber Composition — Typical metal of Group III — $Al_2O_3$ (wt%) | | 50 | | 50 | | 50 | | 50 | | 50 |
| Inorganic fiber Composition — Alkali-earth metal — CaO (wt%) | | | 25 | | 25 | | 25 | | 25 | |
| Inorganic fiber Composition — Alkali-earth metal — MgO (wt%) | 50 | | 25 | | 25 | | 25 | | 25 | |
| Inorganic fiber Composition — Alkali metal — $Na_2O$ (wt%) | | | | | | | | | | |
| Inorganic fiber Composition — Alkali metal — $K_2O$ (wt%) | | | | | | | | | | |
| Inorganic fiber Composition — $SiO_2$ (wt%) | 50 | 50 | 50 | 50 | 50 | 50 | 50 | 50 | 50 | 50 |
| Member — Holding sealing material | | | | | | | ○ | ○ | | |
| Member — Sealing material | ○ | ○ | ○ | ○ | | | | | | |
| Member — Adhesive | ○ | ○ | ○ | | ○ | ○ | | | | |
| Base material of honeycomb structural body | Sic | Sic | Sic | Sic | Sic | Sic | Cordierite | Cordierite | Inorganic fiber | Inorganic fiber |

33

The results shown in Tables 1 and 2 indicate that the honeycomb structural bodies according to Examples 1 to 37 are superior in the NOx converting property and SOx absorbing property in comparison with the honeycomb structural bodies according to Comparative Examples 2, 4, 6, 8 and 10.

Moreover, since the inorganic fibers used for the honeycomb structural bodies according to Examples 1 to 37 are superior in solubility to physiological salt solution in comparison with the alumina silicate fibers used for the honeycomb structural bodies according to Comparative Examples 2, 4, 6, 8 and 10, it is considered that the material is less likely to give adverse effects on the human body.

Moreover, as shown in Table 1, although the honeycomb structural bodies according to Comparative Examples 1, 3, 5, 7 and 9 are superior in the converting property of NOx and in the absorbing property of SOx, and also superior in the solubility of inorganic fibers to physiological salt solution, whereas a positional displacement occurs between the honeycomb structural body and the metal shell as a result of cycle driving operations.

The reason for this is presumably because, since the content of silica in the inorganic fibers becomes too low and the contents of calcium oxide and magnesium oxide become too high, the inorganic fibers become fragile in structure; thus, the inorganic fibers are damaged upon application of a thermal stress due to cycle driving operations.

In the case where a positional displacement occurs between the honeycomb structural body and the metal shell in this manner, a superior gas sealing property is no longer exerted; thus, a leak and the like of exhaust gases tend to occur to cause an insufficient purifying process for exhaust gases.

BRIEF DESCRIPTION OF THE DRAWINGS

Fig. 1 (a) is a perspective view that schematically shows a honeycomb structural body according to a first aspect not of the present invention; and Fig. 1 (b) is a cross-sectional view taken along line A-A of the honeycomb structural body shown in Fig. 1(a).

Fig. 2 is a perspective view that schematically shows one example of a honeycomb structural body according to a second aspect not of the present invention.

Fig. 3(a) is a cross-sectional view that schematically shows a porous ceramic member to be used for the honeycomb structural body of the second aspect shown in Fig. 2, and Fig. 3(b) is a cross-sectional view taken along line B-B of Fig. 3 (a) .

Fig. 4 (a) is a partially enlarged view that schematically shows one example of an end face on the gas flow-in side of a honeycomb structural body in which through holes the end portions of which are sealed on one side of the faces and through holes the endportions of which are sealed on the other side have mutually different opening diameters; Fig. 4(b) is a partially enlarged cross-sectional view that schematically shows another example of an end face on the gas flow-in side of a honeycomb structural body in which through holes the end portions of which are sealed on one side of the faces and through holes the end portions of which are sealed on the other side have mutually different opening diameters, and Fig. 4(c) is a partially enlarged cross-sectional view that schematically shows the other example of an end face on the gas flow-in side of a honeycomb structural body in which through holes the end portions of which are sealed on one side of the faces and through holes the end portions of which are sealed on the other side have mutually different opening diameters.

Fig. 5 (a) is a perspective view that schematically shows a honeycomb structural body according to the second aspect; and Fig. 5(b) is a cross-sectional view taken along line A-A of the honeycomb structural body shown in Fig. 5(a).

Fig. 6 (a) is a perspective view that schematically shows a sheet obtained from the paper-making process that forms a honeycomb structural body according to the second aspect; and Fig. 6(b) is a perspective view that shows processes in which the sheets obtained from paper-making process, shown in Fig. 6(a), are laminated to form a honeycomb structural body.

Fig. 7 is a cross-sectional view that schematically shows one example of an exhaust gas purifying device in which the honeycomb structural body of the second aspect is used.

Fig. 8 (a) is a perspective view that schematically shows another example of a honeycomb structural body according to the second aspect; and Fig. 8(b) is a perspective view that schematically shows the other example of a honeycomb structural body.

Fig. 9 is a plan view that schematically shows a holding sealing material that is used for an exhaust gas purifying device according to a third aspect and of the present invention.

Fig. 10 is an exploded perspective view that schematically shows one example of an exhaust gas purifying device according to the third aspect of the present invention.

Fig. 11 is a cross-sectional view that schematically shows one example of the exhaust gas purifying device according to the third aspect of the present invention.

Fig. 12 is an exploded perspective view that schematically shows another example of a metal shell that is used for the exhaust gas purifying device according to the third aspect of the present invention.
Fig. 13 is a schematic drawing that shows a measuring device for coefficient of static friction.

EXPLANATION OF SYMBOLS

| 10, 20 | Honeycomb structural body |
|---|---|
| 11, 31 | Through hole |
| 12, 32 | Plug |
| 13 | Wall portion |
| 14, 23, 24 | Sealing material layer (adhesive layer) |
| 15 | Pillar-shaped body |
| 25 | Ceramic block |
| 30 | Porous ceramic member |
| 33 | Partition wall |
| 110 | Honeycomb structural body |
| 111 | Bottomed hole |
| 113 | Wall portion |
| 123 | Casing |
| 210 | Exhaust gas purifying device |
| 300 | Exhaust gas purifying device |
| 310 | Holding sealing material |
| 320 | Honeycomb structural body |
| 330 | Metal shell |

**Claims**

1. A holding sealing material (310) placed between a honeycomb structural body (10, 20, 110, 320) and a metal shell (330) that covers a peripheral portion in the length direction of said honeycomb structural body, said holding sealing material (310) being mainly composed of inorganic fibers,
   wherein
   said inorganic fibers comprise:

   60 to 85% by weight of silica; and
   15 to 40% by weight of at least one kind of compound selected from the group consisting of an alkali metal compound, an alkali-earth metal compound and a boron compound; and
   wherein
   said holding sealing material (310) contains an organic binder having a coat-film strength of about 5MPa or more at normal temperature.

2. The holding sealing material (310) according to claim 1,
   wherein
   a fiber tensile strength of said inorganic fibers is 1.2 to 200 GPa.

3. The holding sealing material (310) according to claim 1,
   wherein
   an average fiber diameter of said inorganic fibers is set to 0.3 to 25 $\mu$m.

4. An exhaust gas purifying device (210, 300) comprising:

   a honeycomb structural body (10, 20, 110, 320);
   a cylindrical metal shell (330) that covers a peripheral portion in the length direction of said honeycomb structural body (10, 20, 110, 320); and
   the holding sealing material (310) according to claim 1, placed between said honeycomb structural body (10, 20, 110, 320) and said metal shell (330).

5. The exhaust gas purifying device (210, 300) according to claim 4,
wherein
a catalyst is supported on said honeycomb structural body (10, 20, 110, 320).

6. The exhaust gas purifying device (210, 300) according to claim 4 or 5,
wherein
a thickness of said holding sealing material (310) prior to the state where said holding sealing material is housed in said metal shell is set to 1.01 to 4.0 times a gap formed by an outer diameter of said honeycomb structural body (10, 20, 110, 320) and an inner diameter of said metal shell.

7. The exhaust gas purifying device (210, 300) according to any one of claims 4 to 6,
wherein
a gap bulk density in a state in which said holding sealing material (310) is housed in said metal shell (330) is set to 0.20 to 0.60 g/cm$^3$.

**Patentansprüche**

1. Fixier- und Dichtungsmaterial (310), das zwischen einem Wabenstrukturkörper (10, 20, 110, 320) und einer Metallhülle (330) angeordnet ist, die einen peripheren Abschnitt in der Längsrichtung des Wabenstrukturkörpers bedeckt, wobei das Fixier-und Dichtungsmaterial (310) hauptsächlich aus anorganischen Fasern besteht,
wobei
die anorganischen Fasern umfassen:

   60 bis 85 Gew.-% Silica,
   15 bis 40 Gew.-% wenigstens einer Art einer Verbindung, die aus der aus einer Alkalimetallverbindung, einer Erdalkalimetallverbindung und einer Borverbindung bestehenden Gruppe ausgewählt ist, und
   wobei
   das Fixier- und Dichtungsmaterial (310) ein organisches Bindungsmittel enthält, das eine Beschichtungsfilmstärke von ungefähr 5 MPa oder mehr bei Normaltemperatur aufweist.

2. Fixier- und Dichtungsmaterial (310) nach Anspruch 1,
wobei
eine Faserzugfestigkeit der anorganischen Fasern 1,2 bis 200 GPa beträgt.

3. Fixier- und Dichtungsmaterial (310) nach Anspruch 1,
wobei
ein durchschnittlicher Faserdurchmesser der anorganischen Fasern auf 0,3 bis 25 μm eingestellt ist.

4. Abgasreinigungsvorrichtung (210, 300), umfassend:

   einen Wabenstrukturkörper (10, 20, 110, 320),
   eine zylindrische Metallhülle (330), die einen peripheren Abschnitt in der Längsrichtung des Wabenstrukturkörpers (10, 20, 110, 320) bedeckt, und
   das Fixier- und Dichtungsmaterial (310) nach Anspruch 1, das zwischen dem Wabenstrukturkörper (10, 20, 110, 320) und der Metallhülle (330) angeordnet ist.

5. Abgasreinigungsvorrichtung (210, 300) nach Anspruch 4,
wobei
auf dem Wabenstrukturkörper (10, 20, 110, 320) ein Katalysator gelagert ist.

6. Abgasreinigungsvorrichtung (210, 300) nach Anspruch 4 oder 5,
wobei
eine Dicke des Fixier- und Dichtungsmaterials (310) vor dem Zustand, in dem das Fixier- und Dichtungsmaterial in der Metallhülle beherbergt ist, auf das 1,01-fache bis 4-fache eines Spaltes eingestellt ist, der durch einen äußeren Durchmesser des Wabenstrukturkörpers (10, 20, 110, 320) und einen inneren Durchmesser der Metallhülle gebildet ist.

**7.** Abgasreinigungsvorrichtung (210, 300) nach einem der Ansprüche 4 bis 6,
wobei
eine Spaltfülldichte in einem Zustand, in dem das Fixier- und Dichtungsmaterial (310) in der Metallhülle (330) beherbergt ist, auf 0,20 bis 0,60 g/cm$^3$ eingestellt ist.

**Revendications**

**1.** Matériau de maintien et d'étanchéité (310) disposé entre un corps structurel en nid d'abeille (10, 20, 110, 320) et une enveloppe de métal (330) qui recouvre une portion périphérique dans la direction de longueur dudit corps structurel en nid d'abeille, ledit matériau de maintien et d'étanchéité (310) étant principalement constitué de fibres inorganiques,
dans lequel
lesdites fibres inorganiques comprennent :

de 60 à 85 % en masse de silice ; et
de 15 à 40 % en masse d'au moins un type de composé choisi dans le groupe constitué d'un composé de métal alcalin, d'un composé de métal acalino-terreux et d'un composé de bore ; et
dans lequel
ledit matériau de maintien et d'étanchéité (310) contient un liant organique présentant une résistance de film de revêtement d'environ 5 MPa ou supérieure à température ambiante.

**2.** Matériau de maintien et d'étanchéité (310) selon la revendication 1,
dans lequel
une résistance à la traction de fibre desdites fibres inorganiques est de 1,2 à 200 GPa.

**3.** Matériau de maintien et d'étanchéité (310) selon la revendication 1,
dans lequel
un diamètre moyen de fibre desdites fibres inorganiques est fixé à de 0,3 à 25 μm.

**4.** Dispositif de purification de gaz d'échappement (210, 300) comprenant :

un corps structurel en nid d'abeille (10, 20, 110, 320) ;
une enveloppe de métal cylindrique (330) qui recouvre une portion périphérique dans la direction de longueur dudit corps structurel en nid d'abeille (10, 20, 110, 320) ; et
le matériau de maintien et d'étanchéité (310) selon la revendication 1, disposé entre ledit corps structurel en nid d'abeille (10, 20, 110, 320) et ladite enveloppe de métal (330).

**5.** Dispositif de purification de gaz d'échappement (210, 300) selon la revendication 4,
dans lequel
un catalyseur est supporté sur ledit corps structurel en nid d'abeille (10, 20, 110, 320).

**6.** Dispositif de purification de gaz d'échappement (210, 300) selon la revendication 4 ou 5,
dans lequel
une épaisseur dudit matériau de maintien et d'étanchéité (310) avant l'état où ledit matériau de maintien et d'étanchéité est logé dans ladite enveloppe de métal est fixée à de 1,01 à 4,0 fois un espace formé par un diamètre externe dudit corps structurel en nid d'abeille (10, 20, 110, 320) et un diamètre interne de ladite enveloppe de métal

**7.** Dispositif de purification de gaz d'échappement (210, 300) selon l'une quelconque des revendications 4 à 6,
dans lequel
une masse volumique apparente d'espace dans un état dans lequel ledit matériau de maintien et d'étanchéité (310) est logé dans ladite enveloppe de métal (330) est fixée à 0,20 à 0,60 g/cm$^3$.

Fig. 1

(a)

(b)

A-A Line cross-sectional view

Fig. 2

Fig. 3

(a)

(b)

B-B Line cross-sectional view

Fig. 4

(a)

52
51
53

(b)

62
61
63

(c)

72
71
73

Fig. 5

(a)

(b)

Fig. 6

EP 1 952 871 B1

Fig. 7

Fig. 8

(a)

(b)

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002200409 A
- WO 03031368 A2
- EP 1142619 A1
- EP 0816065 A1